# EUROPEAN PATENT APPLICATION

(11) **EP 0 634 868 A1**
(43) Date of publication of application: **18.01.1995**
(21) Application number: 94904736.9
(22) Date of filing: 19.01.1994
(51) Int. Cl.: H04N 7/13

(54) **IMAGE SIGNAL ENCODING METHOD, IMAGE SIGNAL ENCODER, IMAGE SIGNAL DECODING METHOD, IMAGE SIGNAL DECODER, AND IMAGE SIGNAL RECORDING MEDIUM**

(30) Priority: 19.01.1993 JP 7046/93; 25.01.1993 JP 10302/93
(71) Applicant: SONY CORPORATION, Tokyo 141 (JP)
(72) Inventor: YAGASAKI, Yoichi, Sony Corporation, Shinagawa-ku, Tokyo 141 (JP); YONEMITSU, Jun, Sony Corporation, Shinagawa-ku, Tokyo 141 (JP); SUZUKI, Teruhiko, Sony Corporation, Shinagawa-ku, Tokyo 141 (JP)
(74) Representative: Cotter, Ivan John
(86) International application number: JP9400064
(87) International publication number: WO9417634

(57) **Abstract**

When a moving image is encoded, a region for effecting intro-coding is dispersed into part of a screen unit but not into the whole screen such as a frame or a field. Further, a flag representing its structure is added. The structure of encoded image data is modified for high speed reproduction in accordance with the data of the flag, and is transmitted or recorded. When the encoded data is decoded, the region for which decentralized intra-coding is effected is decoded by using the multiplexed flag, and smooth and high speed normal or reverse reproduction is made. Accordingly, the present invention can accomplish an encoder, a recorder, a device for recording/transmission formatting (bit stream syntax) and reproduction, and a decoder in order to smoothly reproduce a moving image data at a high speed either in normal or reverse mode.

## Description

### Technical field:

The present invention relates to an encoding method, a decoding method, an encoding apparatus, a decoding apparatus, a recording medium, and a recording, reproducing, and decoding apparatus which are suitable for data compression of moving images.

### Background art:

Since moving image data contain an extremely large amount of information, there have heretofore been required recording mediums which allow a very high continuous transmission speed in order to record and reproduce the moving image data. At present, NTSC television video signals, for example, are recorded on and reproduced from magnetic tapes and optical discs.

To record a video signal on a smaller-size recording medium having a smaller recording capacity for a longer period of time, it is necessary to employ a system for encoding the video signal highly efficiently and decoding a read video signal highly efficiently. To meet such a requirement, there have been proposed highly efficient encoding systems which rely upon the correlation of video signals. One of such proposed systems is an MPEG (Moving Picture Experts Group) system.

According to the MPEG system, the difference between image frames of a video signal is produced to reduce the redundancy in the time-axis direction, and thereafter the video signal is processed by an orthogonal transform process such as a discrete cosine transform (DCT) process to reduce the redundancy in the spatial-axis directions. The video signal is thus encoded highly efficiently and recorded on a given recording medium.

A recording medium on which a highly efficiently encoded video signal is recorded can be played back by decoding a reproduced signal efficiently according to inverse orthogonal transform or the like to reproduce the video signal.

High-speed playback of a recording medium on which a highly efficiently encoded video signal is recorded can be effected by decoding the video signal at intervals of several frames and outputting the decoded signal at the same speed as the speed of normal reproduction.

In the encoding according to the MPEG system, one video sequence is divided into a frame group (GOP), e.g., a unit of 12 frames. Each of the frames may be classified into one of three types according to a predictive process.
I: Intra-coded frame (I picture);
P: Frame with motion predicted from a past frame (P picture); and
B: Frame with motion predicted from past and future frames (B picture).

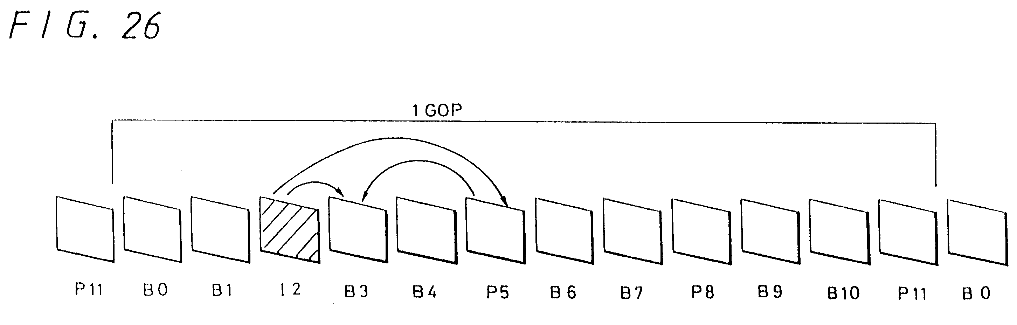

A conventional GOP arrangement is shown in FIG. 26 of the accompanying drawings. The indicated sequential number of each frame in the GOP is defined as a frame number. If the GOP is composed of 12 frames, then the 12th frame has a frame number 11. FIG. 26 shows an example which contains at least one frame of an I picture in a 1 GOP. In FIG. 26, a frame I2 represents an I picture, and an intra-coded in its entirety.

According to the conventional MPEG system, a video signal is encoded while predicting motion between frames. Since there is a frame which cannot be decoded in the absence of decoded images of past and future frames, it may not necessarily be possible to select a frame freely and reproduce it at a high speed.

Actually, a frame that can directly be accessed and decoded is an intra-coded frame which is one in ten and several of the frames. When only these intra-coded frames are reproduced, they can be reproduced only at a high speed with rough motion.

If all frames were decoded at a speed several times higher in order to solve the above problem, then it would be possible to reproduce them at a high speed. However, hardware limitations make it almost impossible to increase the decoding speed several times higher.

The reproduction of only intra-coded frames is also almost impossible to carry out because the time to read the data and the time required to make a track jump are large.

The present invention has been made in view of the above problems, and provides a moving image decoding apparatus capable of reproducing a moving image smoothly at a high speed in both forward and reverse directions without increasing the decoding speed.

### Disclosure of the invention:

In an image signal encoding method according to the present invention, one image is divided and encoded into a plurality of slices, and intra slice information indicative of a structure of intra-frame coded macroblocks in the slices is added to a header.

In an image signal decoding method according to the present invention, intra slice information indicative of a structure of intra-frame coded macroblocks in each of slices is decoded from a predetermined header of an encoded image signal, and the intra-frame coded macroblocks are extracted from the encoded image signal based on the decoded intra slice information.

According to a first invention, there is provided an image signal encoding method of encoding an image signal, characterized in that one image is divided and encoded into a plurality of slices, and intra slice information indicative of a structure of intra-frame coded macroblocks in the slices is added to a header.

According to a second invention, an image signal encoding method is characterized in that the header comprises a slice header having a sync code.

According to a third invention, an image signal encoding method is characterized in that the slices are assigned such that the start of the slices is an intra-frame coded macroblock.

According to a fourth invention, an image signal encoding method is characterized in that the slices are assigned and encoded to slices in which all macroblocks are intra-frame coded and other slices, and the intra slice information indicative of whether all the macroblocks in the slices are intra-frame coded or not is added to the header.

According to a fifth invention, an image signal encoding method is characterized in that intra-frame coded regions are scattered and encoded so that at least some of the intra-frame coded regions are different from each other with respect to a plurality of images.

According to a sixth invention, an image signal encoding method is characterized in that encoded data of the intra-frame coded macroblocks in the slices are moved immediately after a slice header.

According to a seventh invention, an image signal encoding method is characterized in that encoded data of the intra-frame coded macroblocks in the slices are moved immediately after a GOP header.

According to an eighth invention, an image signal encoding method is characterized in that motion compensation is carried out in a limited range corresponding to the intra-frame coded regions to encode the plurality of images.

According to a ninth invention, there is provided an image signal encoding apparatus for encoding an image signal, characterized by encoding means for dividing and encoding one image into a plurality of slices, and adding means for adding intra slice information indicative of a structure of intra-frame coded macroblocks in the slices to a header.

According to a tenth invention, an image signal encoding apparatus is characterized in that the header comprises a slice header having a sync code.

According to an eleventh invention, an image signal encoding apparatus is characterized in that the encoding means assigns the slices such that the start of the slices is an intra-frame coded macroblock.

According to a twelfth invention, an image signal encoding apparatus is characterized in that the encoding means assign and encode the slices to slices in which all macroblocks are intra-frame coded and other slices, and the adding means adds the intra slice information indicative of whether all the macroblocks in the slices are intra-frame coded or not the header.

According to a thirteenth invention, an image signal encoding apparatus is characterized in that the encoding means scatters and encodes the intra-frame coded regions so that at least some of the intra-frame coded regions are different from each other.

According to a fourteenth invention, an image signal encoding apparatus is characterized by order changing means for moving encoded data of the intra-frame coded macroblocks in the slices immediately after a slice header.

According to a fifteenth invention, an image signal encoding apparatus is characterized by order changing means for moving encoded data of the intra-frame coded macroblocks in the slices immediately after a GOP header.

According to a sixteenth invention, an image signal encoding apparatus is characterized in that the encoding means carries out motion compensation in a limited range corresponding to the intra-frame coded regions to encode the plurality of images.

According to a seventeenth invention, there is provided an image signal decoding method of decoding an encoded image signal, characterized in that intra slice information indicative of a structure of intra-frame coded macroblocks in each of slices is decoded from a predetermined header of an encoded image signal, and the intra-frame coded macroblocks are extracted from the encoded image signal based on the decoded intra slice information.

According to an eighteenth invention, an image signal decoding method is characterized in that the header comprises a slice header having a sync code, and the start of each of the slices is determined by detecting the sync code.

According to a nineteenth invention, an image signal decoding method is characterized in that the encoded image signal is reproduced at a variable speed from a recording medium, and the extracted intra-frame coded macroblocks are decoded to generate an image which is reproduced at a variable speed.

According to a twentieth invention, an image signal decoding method is characterized in that macroblocks other than the decoded macroblocks are copied and decoded from a past decoded image which is referred to for thereby generating the image which is reproduced at a variable speed.

According to a twenty-first invention, an image signal decoding method is characterized in that the decoded macroblocks are written over a past decoded image which is referred to for thereby generating the image which is reproduced at a variable speed.

According to a twenty-second invention, an image signal decoding method is characterized in that an encoded image signal is reproduced at a normal speed from a recording medium, intra slice information indicative of a structure of intra-frame coded macroblocks in each of slices is decoded from a predetermined header of the reproduced encoded image signal, the order of encoded data of the intra-frame coded macroblocks are changed to an order with which the image signal has been encoded, based on the decoded intra slice information, and the encoded image signal which has been changed in order is decoded to generate a normally reproduced image.

According to a twenty-third invention, an image signal decoding method is characterized in that the encoded image signal is a signal in which the encoded data of the intra-frame coded macroblocks in the slices are moved immediately after a slice header.

According to a twenty-fourth invention, an image signal decoding method is characterized in that the encoded image signal is a signal in which the encoded data of the intra-frame coded macroblocks in a GOP are moved immediately after a GOP header.

According to a twenty-fifth invention, there is provided an image signal decoding apparatus for decoding an encoded image signal, characterized by means for decoding intra slice information indicative of a structure of intra-frame coded macroblocks in each of slices from a predetermined header of an encoded image signal, and extracting means for extracting the intra-frame coded macroblocks from the encoded image signal based on the decoded intra slice information.

According to a twenty-sixth invention, an image signal decoding apparatus is characterized in that the header comprises a slice header having a sync code, and characterized by means for detecting the sync code.

According to a twenty-seventh invention, an image signal decoding apparatus is characterized by means for reproducing the encoded image signal at a variable speed from a recording medium, and decoding means for decoding the intra-frame coded macroblocks extracted by the extracting means to generate an image which is reproduced at a variable speed.

According to a twenty-eighth invention, an image signal decoding apparatus is characterized in that the decoding means copies and decodes macroblocks other than the decoded macroblocks from a past decoded image which is referred to for thereby generating the image which is reproduced at a variable speed.

According to a twenty-ninth invention, an image signal decoding apparatus is characterized in that the decoding means writes the decoded macroblocks over a past decoded image which is referred to for thereby generating the image which is reproduced at a variable speed.

According to a thirtieth invention, there is provided an image signal decoding apparatus for decoding an encoded image signal, characterized by reproducing means for reproducing an encoded image signal at a normal speed from a recording medium, means for decoding intra slice information indicative of a structure of intra-frame coded macroblocks in each of slices from a predetermined header of the reproduced encoded image signal, order changing means for changing the order of encoded data of the intra-frame coded macroblocks to an order with which the image signal has been encoded, based on the decoded intra slice information, and means for decoding the encoded image signal which has been changed in order to generate a normally reproduced image.

According to a thirty-first invention, an image signal decoding apparatus is characterized in that the encoded image signal is a signal in which the encoded data of the intra-frame coded macroblocks in the slices are moved immediately after a slice header.

According to a thirty-second invention, an image signal decoding apparatus is characterized in that the encoded image signal is a signal in which the encoded data of the intra-frame coded macroblocks in a GOP are moved immediately after a GOP header.

According to a thirty-third invention, there is provided an image signal recording medium with an encoded image signal recorded, characterized in that one image is divided and encoded into a plurality of slices, intra slice information indicative of a structure of intra-frame coded macroblocks in the slices is added to a header to generate an encoded bit stream, and the encoded bit stream is recorded on a recording medium.

When a moving image is encoded, regions to be intra-frame coded are scattered in an area smaller than an image area, rather than in the entire image area such as a frame or a field.

A flag indicative of the structure of the scattered regions is added. Based on the flag information, encoded image data are modified in structure into data for high-speed reproduction, transmitted, and recorded.

For decoding the encoded moving image, the scattered intra-frame coded regions are decoded using multiplexed flags to reproduce the moving image smoothly at a high speed in forward and reverse directions.

### Brief description of the drawings:

FIG. 1A is a block diagram of an image encoding apparatus for an image signal according to an embodiment of the present invention;
FIG. 1B is a block diagram of the image encoding apparatus for an image signal according to the embodiment of the present invention;
FIG. 2A is a diagram showing an MB start code illustrative of operation of the image encoding apparatus;
FIG. 2B is a diagram showing an MB counter reset illustrative of operation of the image encoding apparatus;
FIG. 2C is a diagram showing a Slice start code illustrative of operation of the image encoding apparatus;
FIG. 2D is a diagram showing a slide counter reset illustrative of operation of the image encoding apparatus;
FIG. 2E is a diagram showing a frame start illustrative of operation of the image encoding apparatus;
FIG. 2F is a diagram showing a frame reset illustrative of operation of the image encoding apparatus;
FIG. 3 is a block diagram of an image decoding apparatus according to an embodiment of the present invention;
FIG. 4 is a diagram illustrative of an encoding procedure for intra slices according to the present invention;
FIG. 5 is a diagram illustrative of an encoding procedure for intra columns according to the present invention;
FIG. 6A is a diagram illustrative of a slice structure according to the present invention;
FIG. 6B is a diagram illustrative of a slice structure according to the present invention;
FIG. 6C is a diagram illustrative of a slice structure according to the present invention;
FIG. 6D is a diagram illustrative of a slice structure according to the present invention;
FIG. 6E is a diagram illustrative of a slice structure according to the present invention;
FIG. 6F is a diagram illustrative of a slice structure according to the present invention;
FIG. 7A is a diagram showing a slice with no intra MBs, illustrating the arrangement of a bit stream according to the present invention;
FIG. 7B is a diagram showing a slice with all intra MBs, illustrating the arrangement of a bit stream according to the present invention;
FIG. 7C is a diagram showing a slice with some intra MBs, illustrating the arrangement of a bit stream according to the present invention;

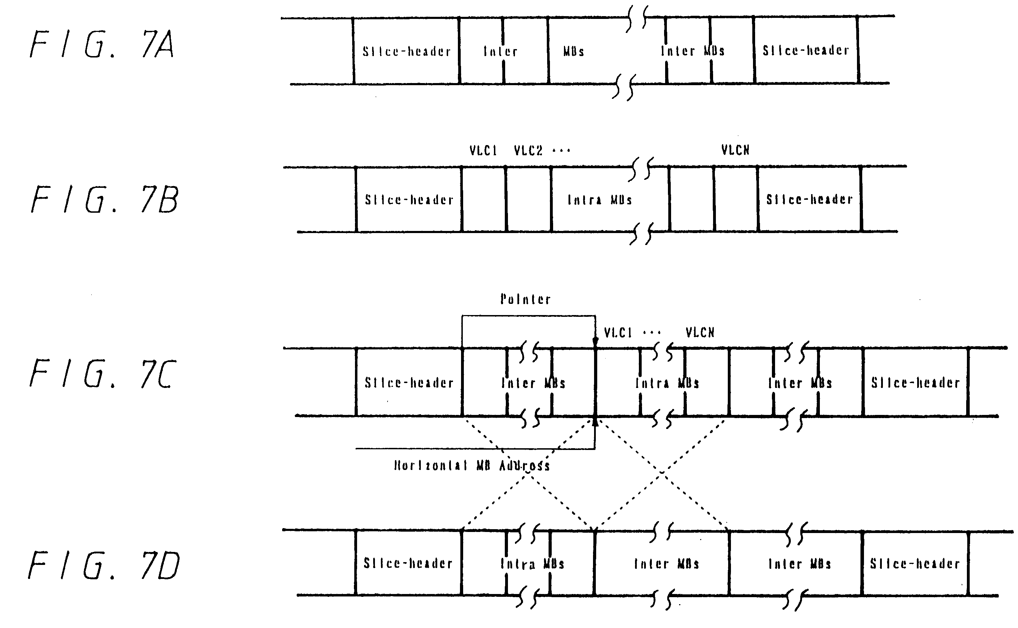

FIG. 7C is a diagram showing a bit stream with a modified sequence, illustrating the arrangement of a bit stream according to the present invention;

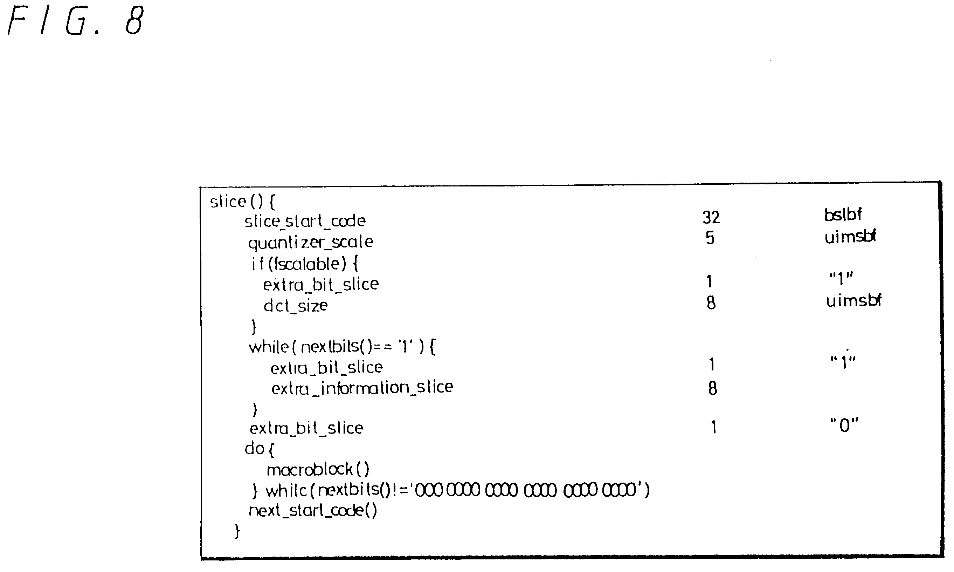

FIG. 8 is a diagram showing a syntax of a slice layer of MPEG;

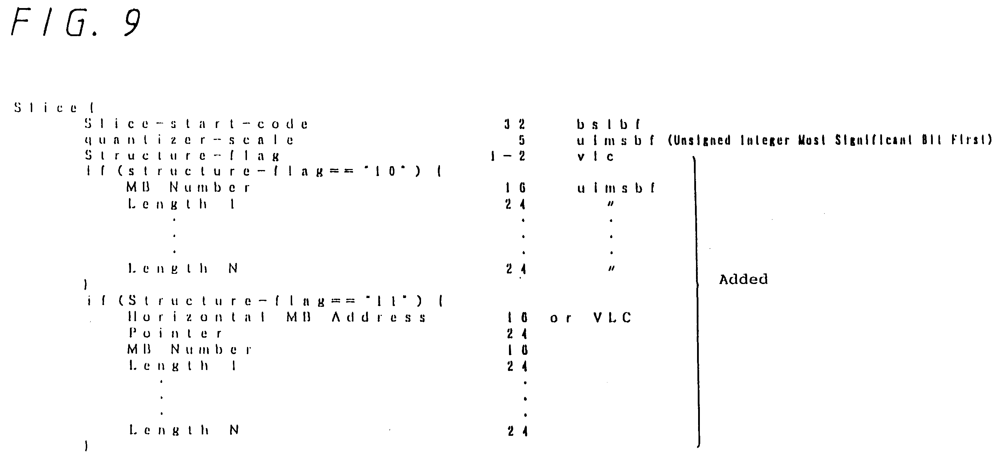

FIG. 9 is a diagram showing an introduction of syntax according to the present invention into MPEG;

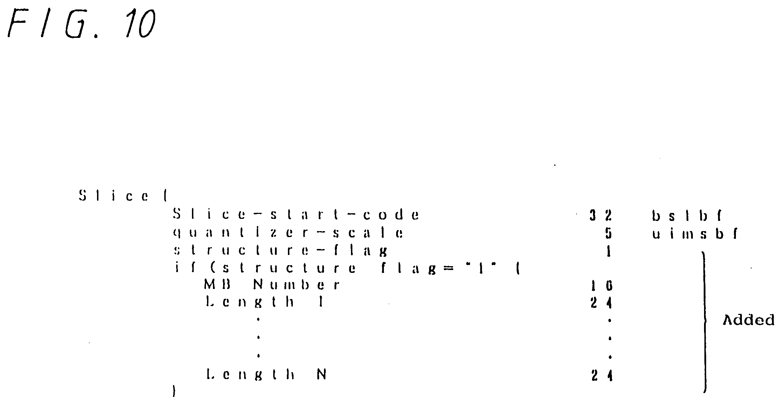

FIG. 10 is a diagram showing an introduction of syntax according to the present invention into MPEG;

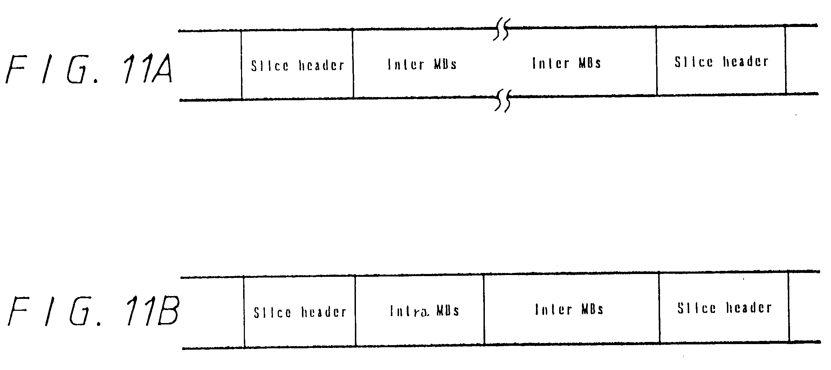

FIG. 11A is a diagram showing slice with no intra MBs showing the arrangement of a bit stream according to the present invention;
FIG. 11B is a diagram showing slice with some intra MBs (including all intra MBs) showing the arrangement of a bit stream according to the present invention;

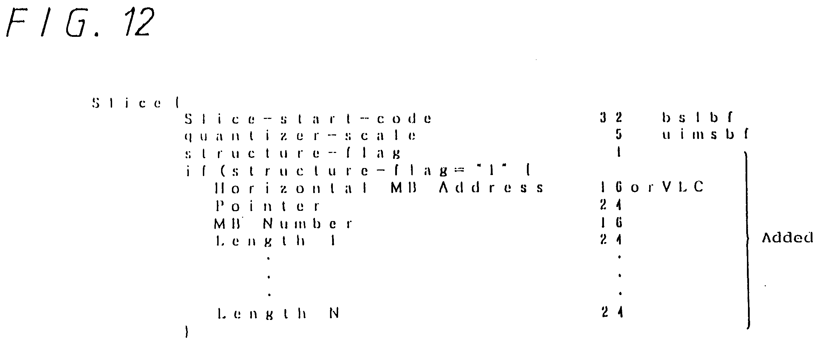

FIG. 12 is a diagram showing an introduction of syntax according to the present invention into MPEG;

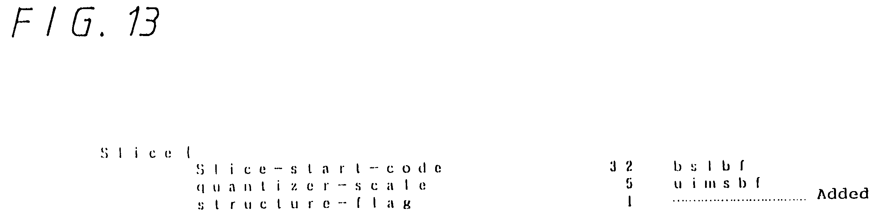

FIG. 13 is a diagram showing an introduction of syntax according to the present invention into MPEG;

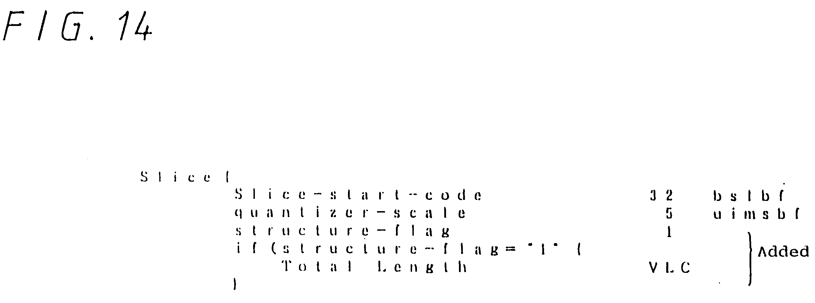

FIG. 14 is a diagram showing an introduction of syntax according to the present invention into MPEG;

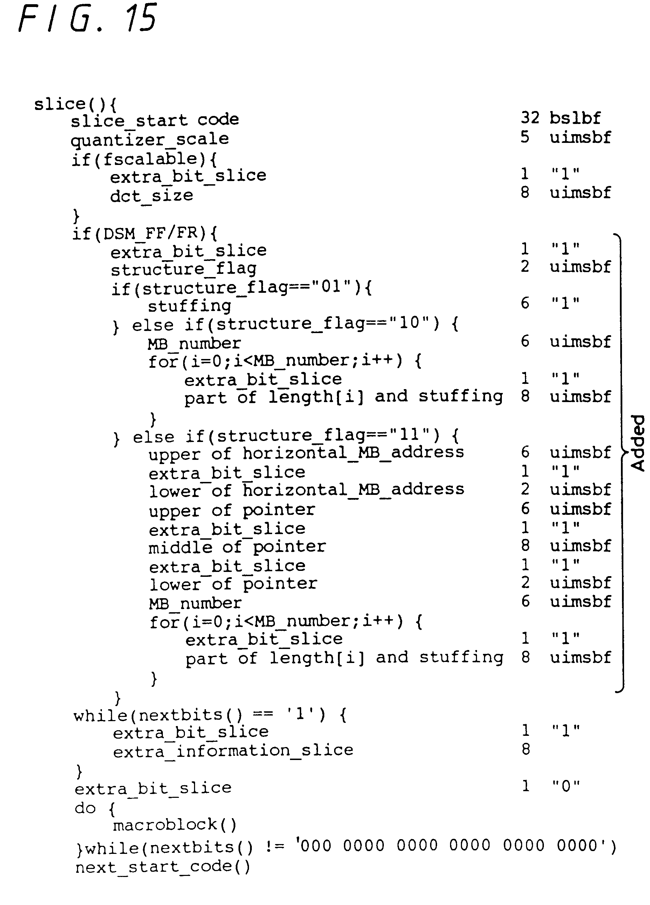

FIG. 15 is a diagram showing an introduction of syntax according to the present invention into MPEG;

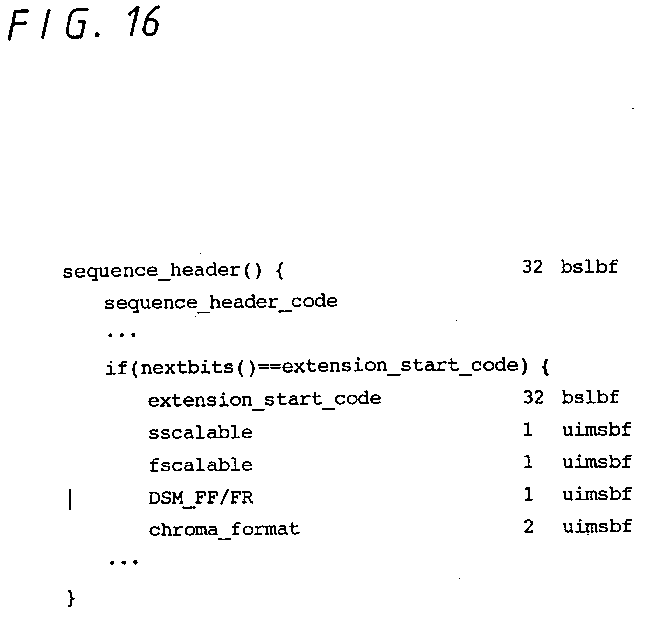

FIG. 16 is a diagram showing an introduction of syntax according to the present invention into MPEG;

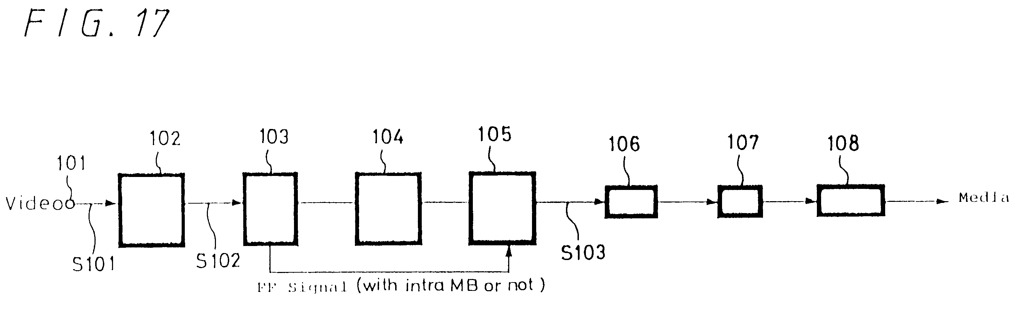

FIG. 17 is a block diagram of an encoding system according to an embodiment of the present invention;

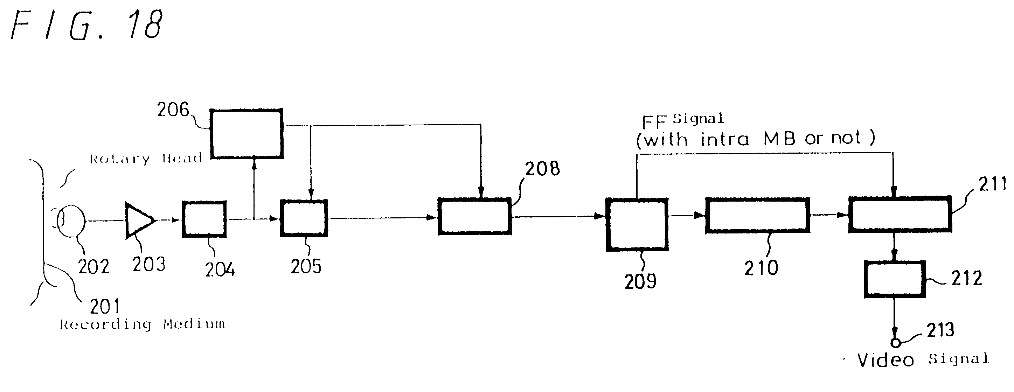

FIG. 18 is a block diagram of a decoding system according to an embodiment of the present invention;

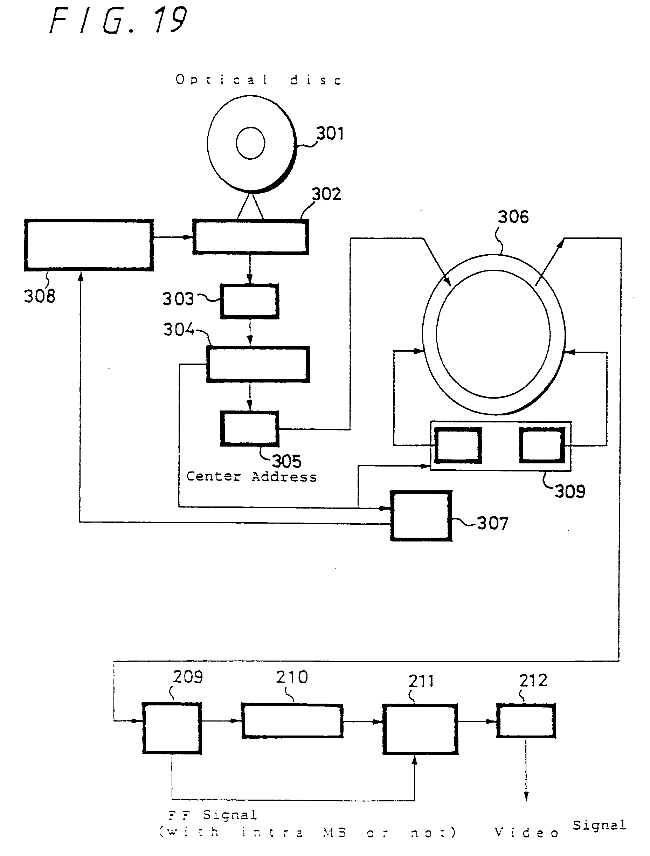

FIG. 19 is a block diagram of a decoding system according to an embodiment of the present invention;

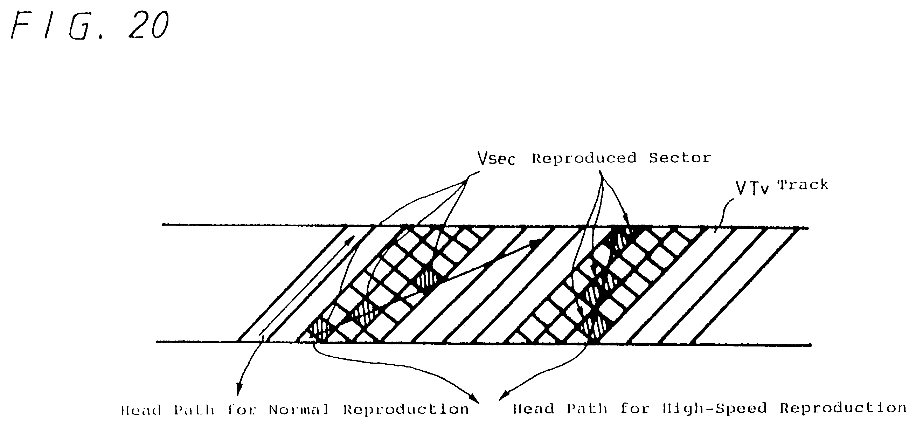

FIG. 20 is a view illustrative of head paths upon high-speed reproduction;

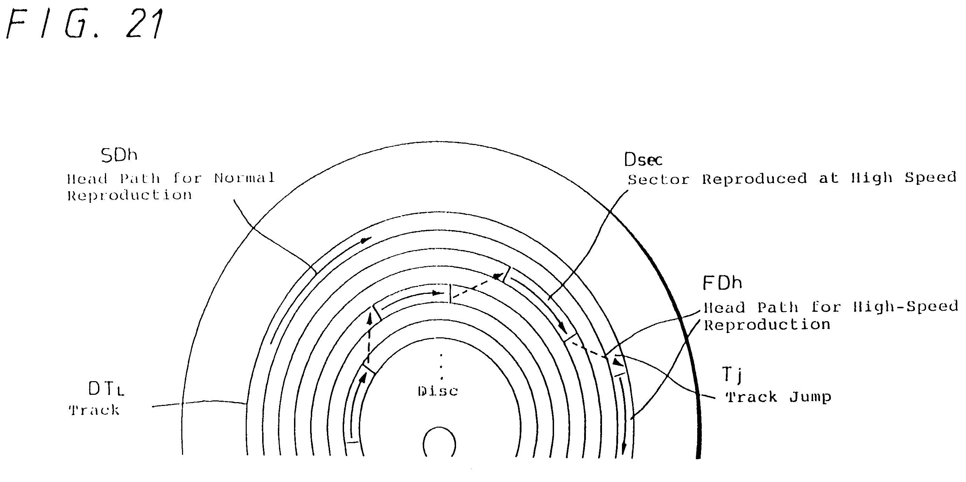

FIG. 21 is a view illustrative of head paths upon high-speed reproduction;

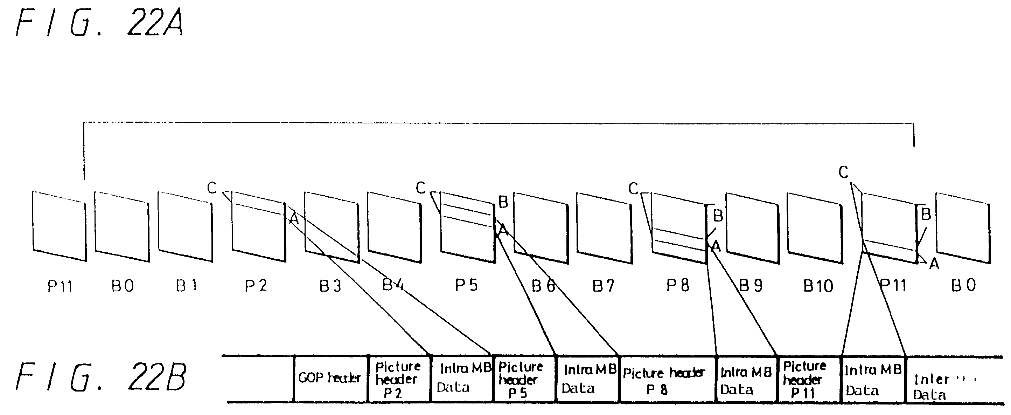

FIG. 22A is a diagram illustrative of the arrangement of a bit stream according to the present invention;
FIG. 22B is a diagram illustrative of the arrangement of a bit stream according to the present invention;

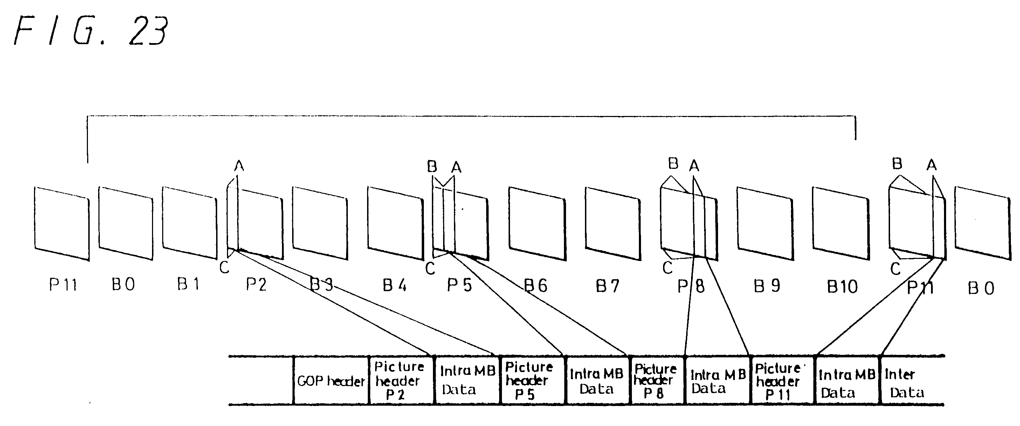

FIG. 23A is a diagram illustrative of the arrangement of a bit stream according to the present invention;
FIG. 23B is a diagram illustrative of the arrangement of a bit stream according to the present invention;

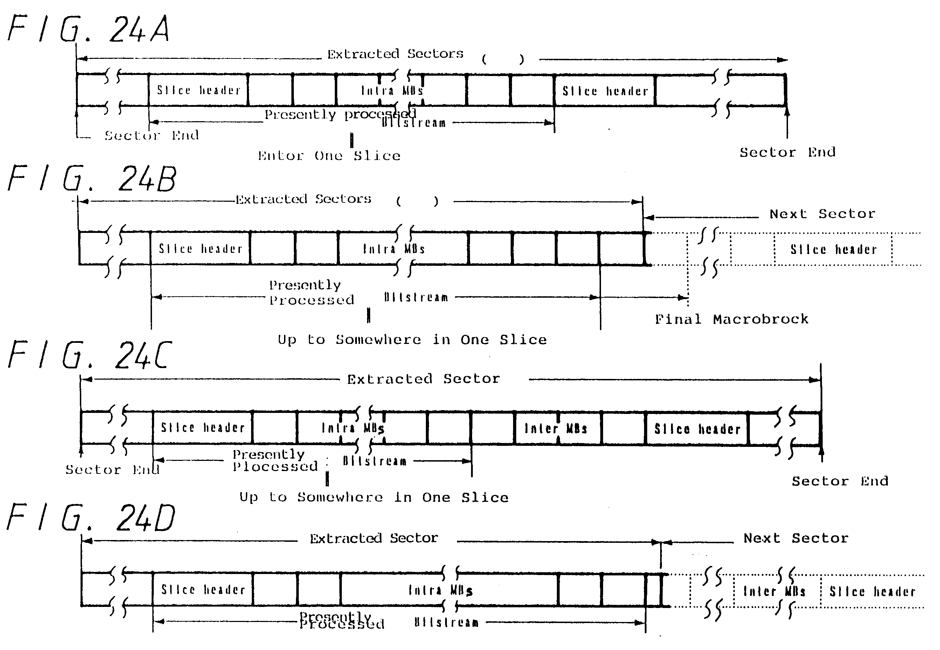

FIG. 24A is a diagram showing the arrangement of a bit stream in a case (A) according to the present invention;
FIG. 24B is a diagram showing the arrangement of a bit stream in a case (B) according to the present invention;
FIG. 24C is a diagram showing the arrangement of a bit stream in a case (C) according to the present invention;
FIG. 24D is a diagram showing the arrangement of a bit stream in a case (D) according to the present invention;

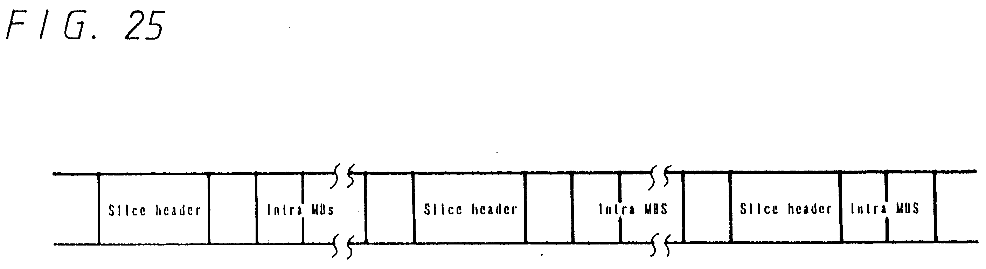

FIG. 25 is a diagram illustrative of the arrangement of a bit stream according to the present invention; and
FIG. 26 is a diagram illustrative of a conventional encoding procedure.

### Best mode for carrying out the invention:

Embodiments of an encoding method, a decoding method, an encoding apparatus, a decoding apparatus, a recording medium according to the present invention will hereinafter be described with reference to the drawings.

### [Encoder and decoder]

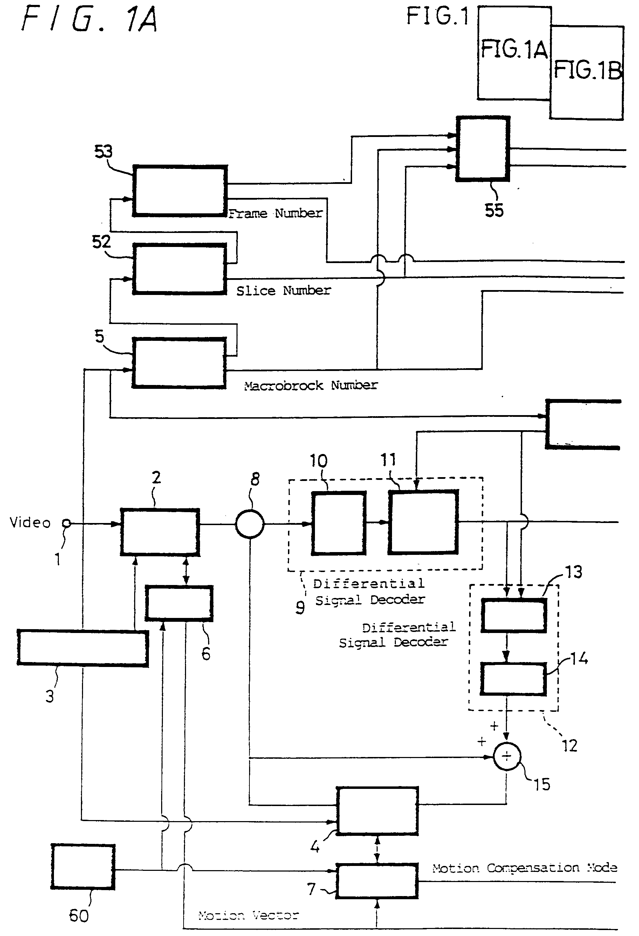

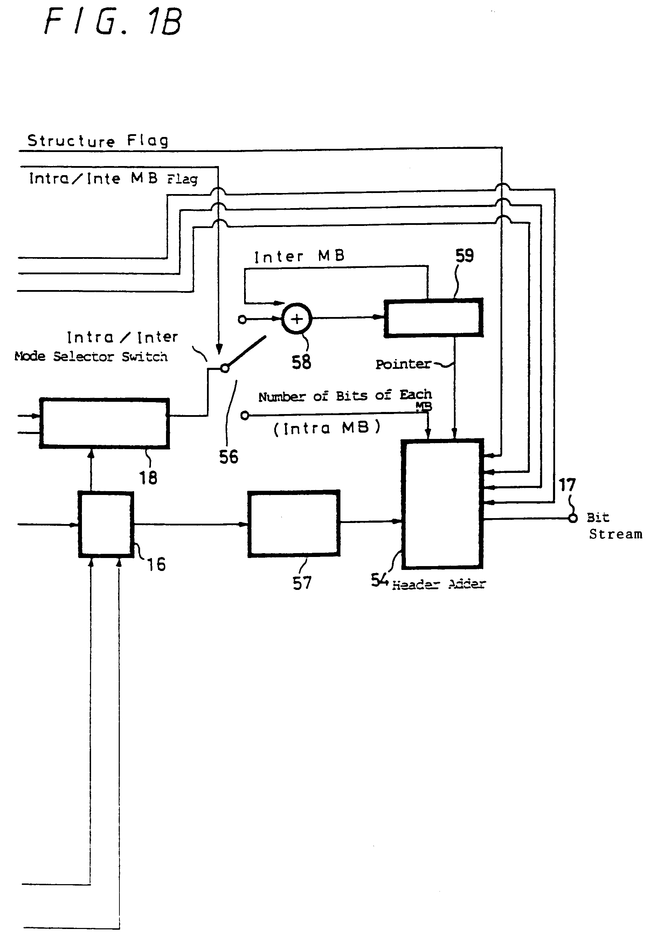

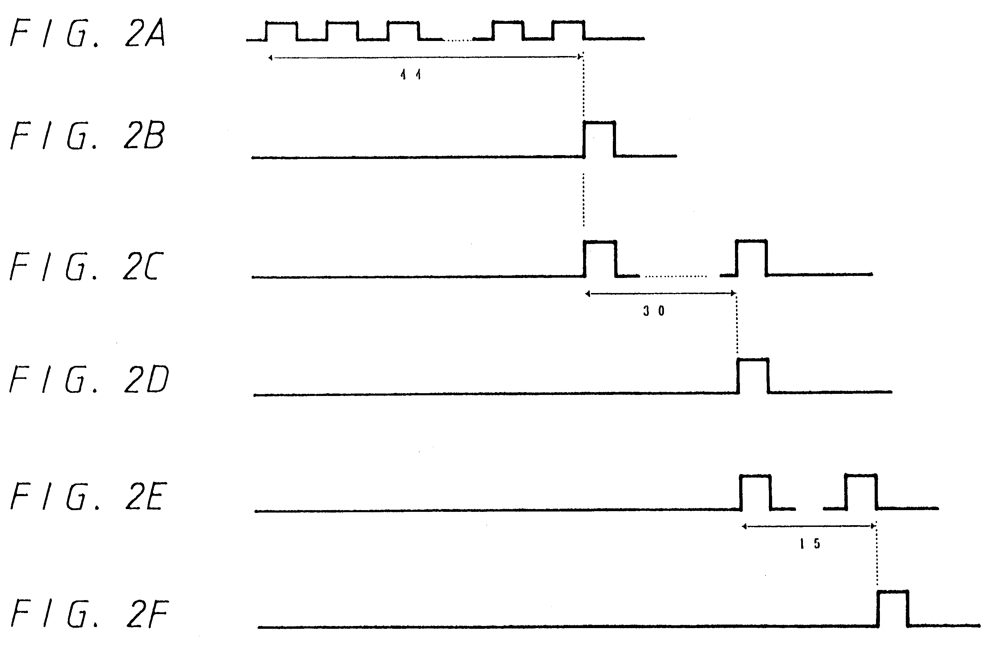

Highly efficient encoding and decoding methods for an image signal will first be described with reference to FIGS. 1 and 2. The encoding and decoding methods are a hybrid process composed of a combination of a motion compensation predictive encoding process and an encoding process such as of DCT (Discrete Cosine Transform) or the like.

The hybrid encoding process is widely used in standards for encoding moving images for use in storage mediums, which have been developed as H.261 and ISO-IEC/JTC1/ SC2/WG11 (generally referred to as MPEG) in CCITT (International Telegraph and Telephone Consultative Committee) which are moving image encoding standards for videophone.

The motion compensation predictive encoding process is a process which utilizes the correlation of a moving image signal in the time-axis direction. In this process, an image to be encoded at present is predicted from an image signal that has already been decoded and reproduced, and motion information including a predicted error, a motion vector, and a predictive mode is transmitted for thereby compressing the amount of information which is required to encode the image.

A motion compensation predictive error signal at this time is encoded utilizing the correlation in the amplitude-axis direction. One typical example of differential signal encoder is based on a combination of DCT and quantization. DCT encoding employs the two-dimensional correlation of an image signal in a frame (in a field) to concentrate signal power on a certain frequency component, and encode only the concentrated coefficients for thereby making it possible to compress the amount of information.

FIG. 1 shows a hybrid encoder 102 in block form. An image signal inputted from an image input terminal 1 is supplied to a field memory group 2. A memory controller 3 controls the readout from the field memory group 2 and a field memory group 4 according to a predetermined video sequence.

The memory controller 3 supplies a slice start code to a macroblock counter 5 in synchronism with each start of a macroblock of an image which is to be encoded at present and is read from the field memory group 2.

A motion predicting circuit 6 predicts motion of pixels in an image to be encoded at present of the image signal supplied to the field memory group 2, by referring to past and future images. The motion prediction is equal to block matching between a block image signal in the image which is to be encoded at present and a past image or a future image which is referred to. The size of a block is 16 ¥ 16 pixels, for example. The past and future images referred to at this time are indicated from the data in the field memory group 2 according to a motion predictive reference image indicating signal outputted from the memory controller 3. The motion predicting circuit 6 supplies a block position in the image referred to where the predictive error of the block matching is minimum, as a motion vector to a motion compensating circuit 7.

A ROM 60 stores a distribution pattern of infra-frame coding macroblocks for high-speed reproduction which are assigned to each frame. The motion predicting circuit 6 limits a search range for block matching according to the distribution pattern stored in the ROM 60, for thereby limiting a range for a motion vector to be detected to limit a motion compensation range.

The motion compensating circuit 7 instructs the field memory group 4 which stores already decoded and reproduced images to output a block image signal positioned at a position indicated by the motion vector. An image referred to at this time is indicated from the data stored in the field memory group 2 according to the motion predictive reference image indicating signal outputted from the memory controller 3. The block image signal outputted from the field image group 4 allows an adaptive operation, and can switch to an optimum one of four operations, indicated below, with respect to each block.
° Motion compensation mode from a past reproduced image.
° Motion compensation mode from a future reproduced image.
° Motion compensation mode from both past and future reproduced images {a block referred to from a past reproduced image and a block referred to from a future reproduced image are subjected to a linear arithmetic operation (e.g., an average calculation) for each pixel.
° No motion compensation {i.e., a within-image-coding (intra-coding) mode. In this case, the output of a block image signal is equal to zero.).

The modes are switched such that there is selected a mode in which the sum of the absolute values of the differences per pixel between the block image signals outputted in the respective four modes, described above, and the block image signal to be encoded at present. The mode which is selected is outputted as a motion compensation mode signal to a VLC 16, described later on.

The motion compensating circuit 7 is supplied with the distribution pattern of infra-frame coding macroblocks for high-speed reproduction from the ROM 60. The motion compensating circuit 7 selects the intra-coding mode as a motion compensation mode with respect to a macroblock in the distribution pattern, for which intra-coding has been indicated, irrespective of which one of the above modes has been determined.

The block image signal, which is to be encoded at present, supplied from the field memory group 2, and the block image signal, which has been motion-compensated, supplied from the field memory group 4 are supplied to a subtractor 8 which calculates the difference therebetween per pixel to produce a block differential signal. The block differential signal is supplied to a differential signal encoder 9 which produces an encoded signal. The encoded signal is then supplied to a differential signal decoder 12 which decodes the encoded signal into a block reproduction differential signal.

The differential signal encoder 9 comprises a DCT (discrete cosine transform) unit 10 and a quantizer 11 for quantizing output coefficients from the DCT unit 10. The differential signal decoder 12 comprises a dequantizer 11 for dequantizing the quantized coefficients with a quantization table and an inverse DCT unit 14 for subjecting the output coefficients from the dequantizer 11 to inverse DCT.

The block reproduction differential signal is added to the block image signal outputted from the field memory group 4 per pixel by an adder 15, which produces a block reproduction signal. The block reproduction signal is then stored in a field memory in the field memory group 4 which is indicated by the memory controller 3.

The encoded signal outputted from the differential signal encoder 9, together with the motion vector, the motion compensation mode, and the quantization table, is converted into a variable-length code such as the Huffman code by the VLC (variable-length coder) 16, and stored in a slice buffer memory 57. Thereafter, a header is added to the variable-length code by an FLC (fixed-length coder) 54, described later on, and the code is transmitted as a bit stream through a buffer memory (not shown) from an output terminal 17 at a constant transmission rate.

As shown in FIG. 2, a macroblock counter 51 counts macroblock start codes outputted from the memory controller 3 in synchronism with an image read from the field memory group 2. If one slice is composed of 44 macroblocks, for example, then the macroblock counter 51 counts 44 macroblock start codes, and thereafter is reset, and adds one slice of a slice counter 52. If one frame is composed of 30 slices, for example, then the slice counter 32 is reset when the count thereof reaches 30, and adds one frame to a frame counter 53.

If one GOP is composed of 15 frames, for example, then the frame counter 53 is reset when the count thereof reaches 15.

The macroblock counter 51, the slice counter 52, and the frame counter 53 outputs respective counts to the FLC (header adder) 54 and a ROM 55.

The ROM 55 stores a distribution pattern of intra-frame coding macroblocks for high-speed reproduction which are assigned to each of the frames of the GOP. When supplied with the counts from the macroblock counter 51, the slice counter 52, and the frame counter 53, the ROM 55 outputs a flag indicative of whether a structure flag of the slice and the macroblock are an intra-frame coding macroblock for high-speed reproduction or not, to a macroblock mode selector switch 56.

The output from the VLC 16 is stored in a slice buffer 57 in order to add the number of generated bits and a pointer of the intra-frame coding macroblock in the header information.

A bit counter 18 counts the generated bits of each macroblock from the VLC 16, and the output from the bit counter 18 is supplied to a destination selected by the macroblock mode selector switch 56. If the macroblock is an intra macroblock, then the count of the generated bits of each macroblock is outputted to the FLC 54.

If the macroblock is another macroblock, then the generated bits are added by an adder 58, and held by a register 59. Since the sum of generated bits of macroblocks until the structural file becomes 1 serves as a pointer, the value of the sum is outputted to the FLC 54. The register 59 is reset by a slice start code.

By referring to the structure flag, the pointer, the number of generated bits of each intra macroblock, and the output from the macroblock counter, the FLC 54 adds information to a slice header according to a syntax described later on.

The basic coding process in the present invention is the same as the encoding process in MPEG. However, the bit counter 18 counts generated bits of an intra macroblock, and the macroblock counter 51, the slice counter 52, and the frame counter 53 count macroblocks, slices, and frames, respectively. The count information from these counters is fed back to the FLC 54, which outputs a flag according to the present invention into a bit stream based on the count information.

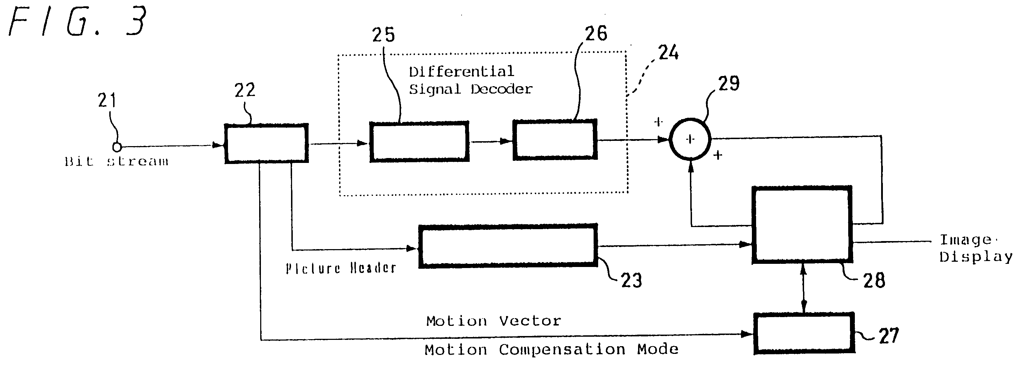

A moving image decoding apparatus according to the present embodiment will be described below with reference to FIG. 3. A bit stream signal inputted from an input terminal 21 through a transmission medium such as an optical disk or the like is supplied to an inverse VLC 22, which decodes the header information of each layer and stores control information for decoding an obtained image in a memory controller 23.

An encoded block signal 50 produced from the inverse VLC 22 is supplied to a differential signal decoder 24, which decodes the encoded block signal into a block reproduction differential signal. The differential signal decoder 24 comprises a dequantizer 25 for dequantizing quantized coefficients with a quantization table produced from the inverse VLC 22 and an inverse DCT (discrete cosine transform) unit 26 for subjecting the output coefficients from the dequantizer 25 to inverse DCT.

A motion vector and a motion compensation mode from the inverse VLC 22 are inputted to a motion compensator 27. In response to the motion vector and the motion compensation mode, the motion compensator 27 instructs a field memory group 28 which has already stored decoded and reproduced images to output a block image signal.

The block image signal outputted from the field memory group 28 allows an adaptive operation depending on the motion compensation mode, and can switch to an optimum one of four operations, indicated below, with respect to each block. The size of a block is 16 ¥ 16 pixels, for example.
° Motion compensation mode from a past reproduced image.
° Motion compensation mode from a future reproduced image.
° Motion compensation mode from both past and future reproduced images {a block referred to from a past reproduced image and a block referred to from a future reproduced image are subjected to a linear arithmetic operation (e.g., an average calculation) for each pixel.
° No motion compensation {i.e., a within-image-coding (intra-coding) mode. In this case, the output of a block image signal is equal to zero.).

The block reproduction differential signal is added to the block image signal outputted from the field memory group 28 per pixel by an adder 29, which produces a block reproduction signal. The block reproduction signal is then stored in a field memory in the field memory group 28 which is indicated by the memory controller 23. A reproduced image stored in the field memory 28 is indicated by an output image indicating signal from the memory controller 3 and outputted from a terminal.

The image decoding apparatus thus arranged reproduces an image from a bit stream.

Details of an encoding process will be described below. A frame will be described as an image unit in the description below. However, where an interlaced image is handled, a field may be employed as an image unit.

First, a scattering of intra macroblocks will be described below.

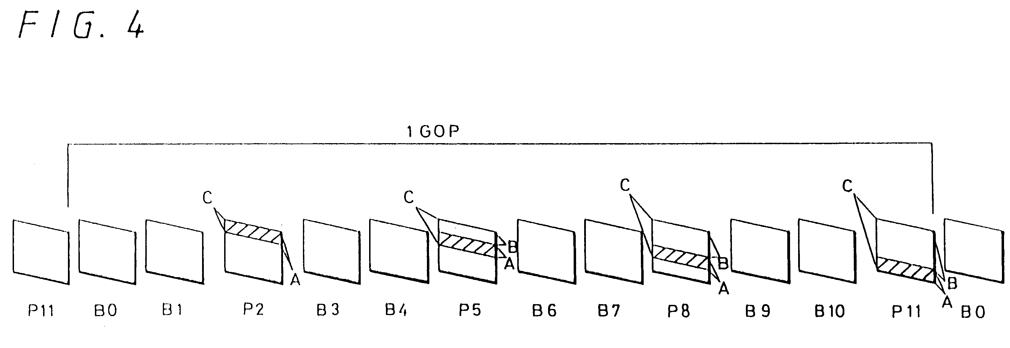

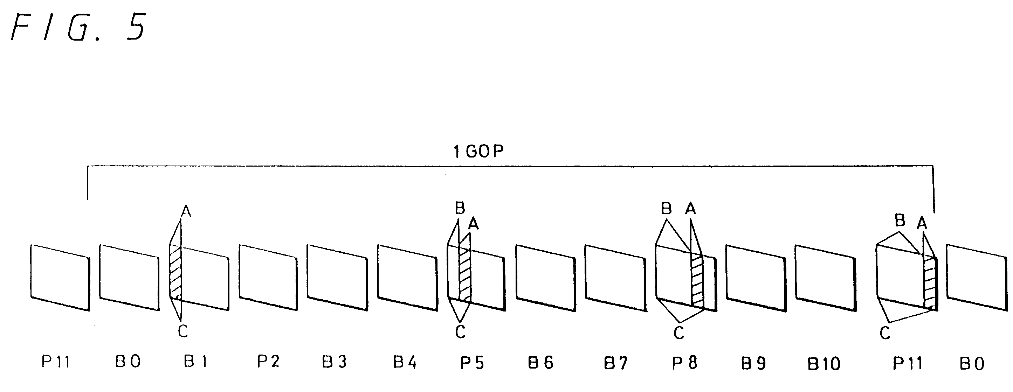

FIGS. 4 and 5 show the arrangements of GOPs. According to the present invention, a GOP is composed of P pictures and B pictures, rather than I pictures. As shown hatched, a region of each of the P pictures is intra-frame coded such that the intra-frame coded regions of the respective P pictures are staggered.

In FIG. 4, the intra-frame coded regions of the respective P pictures are staggered vertically on the image area (hereinafter called "intra slice"). In FIG. 5, the intra-frame coded regions of the respective P pictures are staggered horizontally on the image area (hereinafter called "intra column"). The intra-frame coded regions may be staggered downwardly or to the left.

I pictures may be established, and regions on the image area may be maintained as data for high-speed reproduction as with the P pictures. For high-speed reproduction, only the regions maintained as data for high-speed reproduction are reproduced.

Limitation of regions will be described below.

The intra-frame coded regions are staggered to cover at least the entire image area in one GOP. That is, the regions are limited such that a collection of the intra-frame coded regions (indicated by A) in FIGS. 4 and 5 covers at least the entire image area. Specifically, the intra-frame coded regions are arranged so as not to leave gaps on the image area or so as to overlap each other.

In FIGS. 4 and 5, a region which is intra-frame coded in a certain frame is indicated by A. In a next P picture which is encoded predictively from that frame, a region which is present above an intra-frame coded region A in FIG. 4 or below an intra-frame coded region A in FIG. 5 is indicated by B. The region B is therefore a region which has been intra-frame coded in a prior P picture. The combination of the regions A and B is referred to as a region C.

The region C in a certain frame is either equal to or wider than the region B in a next P picture which is encoded predictively from that frame.

Assignment of slices will be described below.

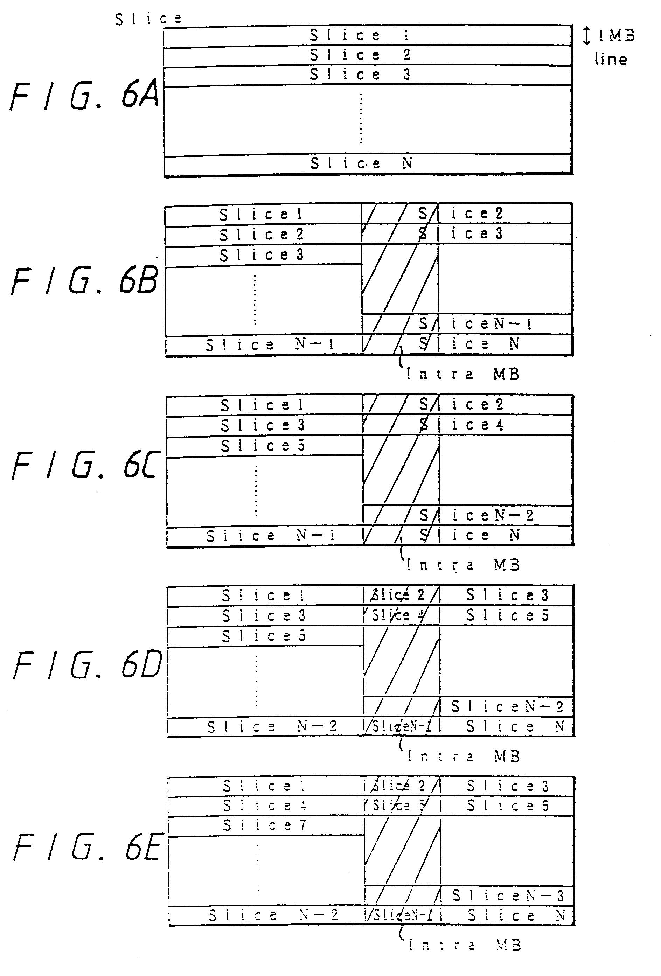

Slices are assigned such that slices are divided with one macroblock line so as to begin at the left end of an image area and end at the right end of the image area as shown in FIG. 6A.

According to a modification, it is possible to divide slices such that intra-frame coding macroblocks scattered as described above are positioned at beginning ends of the slices.

FIGS. 6B and 6C show a structure of intra columns in which intra-frame coding macroblocks scattered as described above are arranged in columns. In FIG. 6B, one slice does not terminate at the right end of an image area. In FIG. 6C, one slice necessarily terminates at the right end of an image area.

According to a modification, it is possible to divide slices such that all macroblocks in a slice are intra-frame coding macroblocks or of other two types. FIGS. 6D and 6E show such slice divisions. FIG. 6D shows a slice structure in which one slice does not terminate at the right end of an image area. FIG. 6E shows a slice structure in which one slice necessarily terminates at the right end of an image area.

Limitation of motion compensation will be described below.

According to the present invention, the motion compensation of a P picture is limited. The region B of a certain frame in FIGS. 4 and 5 is limited to motion compensation from the region C of a past frame which is referred to by that frame.

If the region C of a certain frame is equal to the region B of a P picture which is encoded predictively from that frame, then the motion compensation in the region B is actually limited. Since the motion compensation in a block on a boundary of the region B is limited, the efficiency is somewhat lowered. For example, a block on a lower boundary of the region B in the frame P8 shown in FIG. 4 is motion-compensated only from the region C in the frame P5, and hence no upward motion is compensated for in that block. Similarly, since a block on a right boundary of the region B in the frame P8 shown in FIG. 5 is motion-compensated only from the region C in the frame P5, no leftward motion is compensated for in that block.

If the region C covers an area wider than the region B, however, then the motion compensation is less limited. If a overlapping region covers an area wider than the range of motion compensation, then the motion compensation is not actually limited, and the efficiency is not lowered.

The limitation of regions and the limitation of motion compensation allow the region C to cover the entire image area at least one on one GOP. Inasmuch as the region C is composed of a region A which is intra-frame coded in a certain frame and a region B which is intra-frame coded in a P picture prior to that frame, the region C may be composed of only information which is intra-frame coded in the GOP.

With the limitation of regions and the limitation of motion compensation, therefore, even when decoding is started from somewhere within a bit stream, mismatch-free (with agreement with the encoding side) decoding can be carried out after at least one-GOP data have been decoded. Stated otherwise, random access is assured.

In a specific example, an image has a size of 720 pixels arranged horizontally and 480 lines arranged vertically, and a unit range to be encoded has a size of 16 pixels ¥ 16 lines, which is called a macroblock. The macroblocks are transmitted successively to the right and downwardly on the image. A certain number of macroblocks arranged in the order in which they are transmitted are called a slice. For example, one row of macroblocks across the image area serves as a slice. Specifically, 720 pixels/ 16 pixels = 45 macroblocks, and 480 lines/16 lines = 30 slices.

In order to cover the entire image area with intra-frame coded regions A in FIG. 4, since there are four P pictures, every 7 slices and every 8 slices are alternately intra-frame coded. In order to have regions overlap each other, each of intra-frame coded regions A is composed of 10 slices, the region B of the frame P5 is composed of 7 slices, the region B of the frame P8 is composed of 13 slices, and the region B of the frame P11 is composed of 20 slices, with the result that the regions overlap each other by 3 slices and 2 slices.

In order to cover the entire image area with intra-frame coded regions A in FIG. 5, since there are four P pictures, 11 macroblock widths are intra-frame coded three times and 12 macroblock widths are intra-frame coded once. In order to have regions overlap each other, each of intra-frame coded regions A is composed of 12 macroblocks widths, and the region B of each of the frames P5, P8 is composed of 11 macroblock widths, with the result that the regions overlap each other by 1 macroblock width.

### [Bit stream syntax]

Examples of bit stream syntax (Syntax 1), (Syntax 2), (Syntax 3), (Syntax 4), (Syntax 5), (Syntax 6) will be described below.

First, a slice structure flag will be described below.

According to the above encoding process, since intra-frame coded macroblocks are scattered on the image area, a flag indicative of such a structure is newly established. The syntax according to MPEG is hierarchical, and includes a lowermost layer of a sync code with a unit of slice. In this embodiment, a flag representing a structure is added to the header of a slice. The sync code is a type of synchronizing signal, and is a unique code in that it has a bit pattern in a bit stream and is inhibited from being generated outside of the bit stream. By detecting a start code, it is possible to reproduce data from somewhere within the bit stream (random access), or to return from an error which occurs during transmission in the transmission path.

In this embodiment, a flag indicative of whether there is an intra-frame coded macroblock to be decoded within a certain slice upon reproduction at a high speed in both forward and reverse directions, and also indicative of the structure of such a macroblock if it exists, is inserted in a bit stream by the FLC 54. The intra-frame coded macroblock referred to above is a macroblock which is fixedly intra-frame coded for reproduction at a high speed in both forward and reverse directions. The flag described below is not applied to macroblocks which are adaptively selected and intra-frame coded for ordinary encoding of P pictures.

With respect to intra slices shown in FIG. 4, no intra-frame coded macroblocks are present in a certain slice, and another slice is entirely composed of intra-frame coded macroblocks. With respect to intra-frame columns shown in FIG. 5, some macroblocks in a slice are intra-frame coded. The bit streams of the above slices are illustrated in FIGS. 7A, 7B, and 7C.

### (Syntax 1)

To distinguish the three types of slices shown in

FIGS. 7A, 7B, and 7C, a structure flag is established as shown in Table 1 below.

**Table 1**

| Structure flag | Types of slices |
|---|---|
| 10 | Slice with all Intra MBs |
| 11 | Slice with some intra MBs |
| 0 | Others |

In the case where all macroblocks in a slice are intra-frame coded as shown in FIG. 7B, i.e., the structure flag = "10", a flag indicative of an internal structure is established as shown in Table 2 below.

**Table 2**

| In case the structure flag = "10", | |
|---|---|
| Flag | Number of bits |
| MB Number | 16 bits |
| Length | 24 bits ¥ N |

MB Number: the number of intra MBs in a slice.
(This flag may be of VLC though it is shown as a flag of a fixed length of 16 bits.)
Length: the number of bits of N intra MBs indicated by the MB Number.
(This flag may be of VLC though it is shown as a flag of a fixed length of 24 bits.)

In the case where some macroblocks in a slice are intra-frame coded as shown in FIG. 7C, i.e., the structure flag = "11", a flag indicative of an internal structure is established as shown in Table 3 below.

**Table 3**

| In case the structure flag = "11", | |
|---|---|
| Flag | Number of bits |
| Horizontal MB Address | 16 bits or VLC |
| Pointer | 24 bits |
| MB Number | 16 bits |
| Length | 24 bits ¥ N |

Horizontal MB address: Address of intra MB from the left end of the image area.
(The unit is the number of MBs. This flag may be a flag of a fixed length of 16 bits, or of VLC which is the same as MacroBlock Address Increment used by MPEG.)
Pointer: Pointer from a given position in a slice header to intra MB.
(The unit is a bit. This flag may be of VLC though it is shown as a flag of a fixed length of 24 bits.)
MB Number: the number of intra MBs in a slice.
(This flag may be of VLC though it is shown as a flag of a fixed length of 16 bits.)
Length: the number of bits of N intra MBs indicated by the MB Number.
(This flag may be of VLC though it is shown as a flag of a fixed length of 24 bits.)

With the above flags, even if some macroblocks in a slice are intra-frame coded, the intra-frame coded macroblocks can be extracted only with the flag information in the slice header without decoding the entire bit stream.

The above flags are introduced in a format shown in FIG. 9 after a quantizer scale of a syntax (described in ISO-IEC/JTC1/SC29/WG11 N0328 Test Model 3, Draft Revision 1, page 61) which is reviewed in present MPEG2.

In the event that a slice contains two or more discrete intra-frame coded macroblocks which have been intentionally scattered as described above, the information of only one of the macroblocks is recorded as the above header.

### (Syntax 2)

It is possible to employ Syntax 2 which is a modification of Syntax 1. A slice in which all macroblocks are intra-frame coded may be regarded as being contained in a slice in which some macroblocks are intra-frame coded. Therefore, the slices shown in FIGS. 7A and 7B may be described by the same flag. In this case, the structure flag is of 1 bit as shown in Table 4 below.

**Table 4**

| Structure flag | Types of slices |
|---|---|
| 1 | Slice with some intra MBs |
| 0 | Others |

In the case where the structure flag = "1", a flag indicative of an internal structure is established as shown in Table 5 below.

**Table 5**

| In case the structure flag = "1", | |
|---|---|
| Flag | Number of bits |
| Horizontal MB Address | 16 bits or VLC |
| Pointer | 24 bits |
| MB Number | 16 bits |
| Length | 24 bits ¥ N |

The above flags are introduced in a format shown in FIG. 9 after a quantizer scale of the syntax of MPEG.

### (Syntax 3)

Syntax 3 which is a modification of Syntax 2 will be described below.

For establishing slices such that intra-frame coded macroblocks are positioned at the starts of the slices, as shown in FIGS. 6B and 6C, flags that are transmitted can be reduced by using the following Syntax:

In this case, bit streams of slices have two structures as shown in FIGS. 11A and 11B. Since intra-frame coded macroblocks are necessarily positioned at the starts of the slices, it is not necessary to transmit a pointer and a horizontal MB address.

An example of flag in this case is shown in Table 6 below.

**Table 6**

| Structure flag | Types of slices |
|---|---|
| 1 | Slice with some intra MBs |
| 0 | Others |

In the case where the structure flag = "1", a flag indicative of an internal structure is established as shown in Table 7 below.

**Table 7**

| In case the structure flag = "1", | |
|---|---|
| Flag | Number of bits |
| MB Number | 16 bits |
| Length | 24 bits |

The above flags are introduced in a format shown in FIG. 12 after a quantizer scale of the syntax of MPEG.

### (Syntax 4)

If slices are divided into two types of slices, i.e., slices in which all macroblocks are intra-frame coded macroblocks, and other slices, as shown in FIGS. 6C and 6D, then only a structure flag may be transmitted. However, if all the data of the slices cannot be read, then the data may be decoded according to one of the following processes: (1) only those data which could be read are decoded; (2) the data of the final macroblock which has been read, i.e., the macroblock where the data are interrupted, are discarded, and (3) the data of the final slice which has been read, i.e., the slice where the data are interrupted, are discarded. An example of flag in this case is shown in Table 8 below. This flag is introduced in a format shown in FIG. 13 after a quantizer scale of the syntax of MPEG.

**Table 8**

| Structure flag | Types of slices |
|---|---|
| 1 | Slice with all intra MBs |
| 0 | Others |

### (Syntax 5)

Syntax 5 is a modification of Syntax 4. If slices are divided into two types of slices, i.e., slices in which all macroblocks are intra-frame coded macroblocks, and other slices, then a structure flag shown in Table 8 is transmitted as with Syntax 4, and the number of bits of the intra-frame coded macroblocks is transmitted. It is possible to determine whether all the data of the slices have been read with this flag, only with decoding in the inverse VLC 22 without decoding all the data with the subsequent dequantizer 25 and the inverse DCT. An example of flag in this case is shown in Table 9 below. This flag is introduced in a format shown in FIG. 14 after a quantizer scale of the syntax of MPEG.

**Table 9**

| Flag | Number of bits |
|---|---|
| Total Length | VLC |

If all the data of the slices cannot be read, then the data may be decoded according to one of the following processes: (1) only those data which could be read are decoded; (2) the data of the final macroblock are discarded, and (3) the data of its slice are discarded.

### (Syntax 6)

As a modification of Syntax 1, a structure flag shown in Table 10 below may be established to distinguish between the three types of slices shown in FIGS. 7A, 7B, 7C.

**Table 10**

| Structure flag | Types of slices |
|---|---|
| 01 | Slice without MBs for FF/FR |
| 10 | Slice with all MBs for FF/FR |
| 11 | Slice with some (not all) MBs for FF/FR |
| 00 | Reserved |

Furthermore, if all the macroblocks in the slices are intra-frame coded as shown in FIGS. 6D and 6E, i.e., the structure flag = "10", then a flag indicative of an internal structure is established as shown in Table 11 below.

**Table 11**

| In case the structure flag = "10", | |
|---|---|
| Flag | Number of bits |
| MB Number | 16 bits |
| Length | 24 bits ¥ N |

MB Number: the number of intra MBs in a slice.
Length: the total number of bits of N intra MBs indicated by the MB Number.

If the structure flag = "11", then a flag indicative of an internal structure is established as shown in Table 12 below.

**Table 12**

| In case the structure flag = "11", | |
|---|---|
| Flag | Number of bits |
| Horizontal MB Address | 8 bits |
| Pointer | 16 bits |
| MB Number | 6 bits |
| Length | 12 bits ¥ N (MBs) |

Horizontal MB address: Address of intra MB from the left end of the image area.
Pointer: Pointer from a given position in a slice header to intra MB.
MB Number: the number of intra MBs in a slice.
Length: the number of bits of N intra MBs indicated by the MB Number.

The above flags are introduced into an extra of the syntax of MPEG, as shown in FIG. 15. A flag DSM_FF/FR indicating that data for high-speed reproduction have been recorded is added to a sequence header as shown in FIG. 16.

### [Encoding system and Decoding system]

An embodiment in which the above encoding and decoding apparatus as they are applied to a recording apparatus and a reproducing apparatus will be described below with reference to the drawings. First, the arrangements of a moving image recording apparatus and a moving image reproducing apparatus according to the present invention will be described below.

The arrangement of the moving image recording apparatus is shown in FIG. 17. Input image data S101 are inputted through an input terminal 101 to a hybrid encoder 102 of the type described above, and encoded according to the above encoding process.

An output bit stream S102 from the hybrid encoder 102 is inputted to a data selector 103. The data selector 103 decodes a slice header in the bit stream S102, reads a signal (structure flag described above) indicative of whether an intra-frame coded macroblock is contained in the slice, and outputs the signal as an FF signal to an order changing unit 105.

The data of the intra-frame coded macroblock supplied through a buffer 104 to the order changing unit 105 are changed in order as described later based on the FF signal by the order changing unit 105, and then outputted as data S103 from the order changing unit 105.

To the data S103, there is added an error-correcting code by an ECC circuit 106. The data S103 are supplied through a modulator 107 to a recording head 108, which records the data on a recording medium such as a magnetic tape, an optical disc, or the like.

The arrangements of the moving image reproducing apparatus are shown in FIGS. 18 and 19. FIG. 18 shows the arrangement which employs a tape medium, and FIG. 19 shows the arrangement which employs a disc medium.

First, the arrangement shown in FIG. 18 will be described below. In this embodiment, a signal reproduced from a magnetic tape 201 by a magnetic head 202 mounted on a rotary head drum is outputted through a preamplifier 203 and an equalizer 204 to a demodulator 205, which demodulates the inputted data. An output signal from the equalizer 204 is supplied to a clock reproducing circuit 206, which generates a clock (hereinafter referred to as a "reproduction clock") in synchronism with the reproduced signal. Demodulated data are inputted to a gate circuit 208.

For high-speed reproduction, the recording medium is transported at a speed higher than an ordinary speed. The gate circuit 208 gates only an interval for which the accurate reproduced signal is outputted when digital data recorded in tracks are read in a high-speed search mode, and outputs only reproducible sectors to a data determining unit 209.

The demodulator 105 and the gate circuit 208 are supplied with the reproduction clock from the clock reproducing circuit 206 for processing the signal in synchronism with the supplied reproduction clock.

The data determining unit 209 decodes a slice header in the bit stream, decodes a flag (structure flag as described later on) indicative of whether an intra-frame coded macroblock is contained in the slice, and outputs the flag as an FF signal to an order changing unit 211. For high-speed reproduction, the data determining unit 209 outputs only slices which contain intra-frame coded macroblocks to a buffer 210, and discards slices which contain no intra-frame coded macroblocks, according to the structure flag. Details of operation of the data determining unit 209 will be described later on.

For normal reproduction, the data determining unit 209 outputs all the data to the buffer 210. The data of the slice which contains an intra-frame coded macroblock are changed in order as described later by the order changing unit 211, and then outputted as an output image signal to an image signal decoder 212.

The image signal decoder 212 decodes the supplied image signal, and outputs an image signal. The image signal is outputted through an image output terminal 210.

In the case where the encoded bit stream is recorded on the tape medium, the head scans the tape medium along tracks VTr as indicated by the solid-line arrow SVh in FIG. 20 for normal reproduction. For high-speed forward and reverse reproduction, the head reproduces the recorded data while obliquely cross the tracks VTr as indicated by the solid-line arrow FVh. Therefore, the data of not all sectors Vsec are reproduced, but only the data of some sectors Vsec shown hatched are reproduced. Consequently, the reproduced data comprise a bit stream composed of unsuccessive bunches of successive sectors.

The arrangement shown in FIG. 19 will be described below. To reproduce a signal recorded on a disc medium 301, the signal is read by a pickup 302. Output data from the pickup 302 are demodulated by a demodulator 303. When a sector detector 304 reads one sector of data from the demodulator 303, errors contained in the data are corrected by an error-correcting unit 305. An error-corrected signal from the error-correcting unit 305 is inputted to a ring buffer 306. A drive controller 307 reads a sector address supplied from the sector detector 304, and, if a track jump is necessary, sends a control signal to a tracking servo circuit 308 to move the pickup to an indicated track. A buffer controller 309 controls a write pointer and a read pointer of the ring buffer 306 based on the sector address supplied from the sector detector 304. Output data from the ring buffer 306 are inputted to a data determining unit 209. The data determining unit 209 and following units are identical to those used for the tape medium.

In the case where the encoded bit stream is recorded on the disc medium, the head reproduces sectors on a track DTr on the disc as indicated by the solid-line arrow SDh in FIG. 21 for normal reproduction. For high-speed forward and reverse reproduction, the head repeatedly reproduces sectors Dsec on a track DTr on the disk, then makes a track jump to a next track, and reproduces sectors Dsec on the track as indicated by the solid-line arrows FDh and the broken-line arrows Tj.

On the tape or disc medium, therefore, not all the data are reproduced, but only the data of some sectors Dsec are reproduced. Consequently, the reproduced data comprise a bit stream composed of unsuccessive bunches of successive sectors. According to the present invention, the data determining unit 209 modifies the bit stream composed of unsuccessive bunches of successive sectors such that the ordinary MPEG decoder can reproduce the bit stream to produce an image upon high-speed forward and reverse reproduction. At this time, the flags described above are employed.

### [Changing the order in which the bit stream is transmitted]

Two embodiments of a process of transmitting a bit stream will be described below.

### (Transmission process 1)

° Changing the structural order of a bit stream on a recording/transmitting side.
   In case intra columns are employed (the structure flag encoded by the FLC 54 shown in FIG. 1 is "1" or "11"), these flags are employed to change the structural order of the bit stream from FIG. 7C to FIG. 7D in the order changing unit 105 shown in FIG. 17. Specifically, the bit stream of an intra-frame coded macroblock is moved immediately after the slice header, and recorded on a recording medium or transmitted. By then detecting the slice header which is a sync code, the data of the intra-frame coded macroblock can immediately be obtained for smooth high-speed reproduction.
° Reconstructing a bit stream on a reproducing/ receiving side.
   For high-speed reproduction, the order changing unit 211 outputs a bit stream which has been recorded or transmitted, as it is. For normal reproduction, if intra columns are employed, i.e., if the structure flag in the slice header is "1" or "11", then the flag indicative of the structure in the slice header is used to change the order of the bit stream from the order shown in FIG. 7D to the original encoded order shown in FIG. 7C in the order changing unit 211 shown in FIGS. 18 and 19.
   The other embodiment relative to the changing of the transmission order of the bit stream will be described below. (Transmission process 2)
° Changing the structural order of a bit stream on a recording/transmitting side.
   In case intra slices/columns are employed (the structure flag is "1" or "10" or "11"), these flags are employed to change the structural order of the bit stream in the order changing unit 105 shown in FIG. 17. Specifically, the bit stream of all intra slices/columns contained in a GOP is moved immediately after a GOP header having a sync code, and recorded on a recording medium or transmitted.
   By then detecting the GOP header which is a bunch of motion compensation, the data of the intra-frame coded intra slices can be obtained for smooth high-speed reproduction.
° Reconstructing a bit stream on a reproducing/ receiving side.
   For high-speed reproduction, the order changing unit 211 outputs a bit stream which has been recorded or transmitted, as it is. For normal reproduction, if only intra slices are employed, then the above flag in the slice header is used to change the order of the bit stream to the original encoded order in the order changing unit 211 shown in FIGS. 18 and 19.

### [Operation of the data determining unit]

For normal reproduction, the data determining unit 209 outputs a reproduced bit stream as it is. For decoding the above bit stream, the inverse VLC 22 of the decoder 212 does not decode the structure flag as the structure flag is redundant.

For high-speed reproduction, the data determining unit 209 extracts data of intra-frame coded macroblocks from a reproduced bit stream, and interconnects the data to generate a bit stream which can be reproduced easily by the MPEG decoder.

First, a slice start code is detected from a bit stream composed of unsuccessive sectors. Since the slice start code is a sync code and byte-aligned, the slice start code can be detected without decoding the bit stream in its entirety. The data from the starting end of the sector to a position before the slice start code are not utilized.

The slice start code contains the vertical position of the slice on the image area, so that the vertical position of the slice can be identified with the slice start code. When the slice start code is detected, the given position of the slice header is decoded to detect the above flag. At this time, the data determining unit 209 detects the structure flag, and effects the following processing according to the detected structure flag:
(1) If the detected structure flag is 0 : Slice with no intra macroblock, then since the slice contains no intra macroblock, the bit stream following the slice header is unnecessary until the slice start code is detected or up to the end of a plurality of successive sectors which have been reproduced. Therefore, these data are not employed.
(2) If the detected structure flag is 10 : Slice with all intra macroblocks, then the bit stream following the slice header is the data of the intra macroblocks, it is used for high-speed forward and reverse reproduction. Therefore, for the bit stream following the slice header, there is employed a shorter one of a bit stream until the slice start code is detected or a bit stream up to the end of a plurality of successive sectors which have been reproduced.
(3) If the detected structure flag is 11 : Slice with some intra macroblocks, then because the bit stream following the slice header contains some of the data of the intra macroblocks, only a corresponding portion of the bit stream is employed for high-speed forward and reverse reproduction. Therefore, a shorter one of a bit stream which extends from the bit stream following the slice header for a length indicated by Length, or a bit stream up to the end of a plurality of successive sectors which have been reproduced is employed.

The bit stream thus extracted for high-speed forward and reverse reproduction is shown in FIG. 24. If the structure flag is (2) 10 : Slice with all intra macroblocks and (3) 11 : Slice with some intra macroblocks, then the data determining unit 209 effects the following processing:

### (2) Slice with all intra macroblocks:

### Case (A):

If an extracted bit stream is a bit stream from a slice header to a next slice header, then the bit stream is connected to another bit stream as it is complete.

### Case (B):

If an extracted bit stream is a bit stream from a slice header to the end of a plurality of successive sectors, then the bit stream is interrupted at the sector end, and hence a macroblock at the last end of the sector is interrupted. Since the final macroblock cannot be decoded, the bit stream except the final macroblock is connected to another bit stream. The final macroblock can be removed because it is already known from the information of the flag in the slice header that the amount of code of all the intra macroblocks from the start of the slice.

### (3) Slice with some intra macroblocks:

### Case (C):

If an extracted bit stream is a bit stream from a slice header, which has a length indicated by Length, then the bit stream is connected to another bit stream as it is complete.

### Case (D):

If an extracted bit stream is a bit stream from a slice header to the end of a plurality of successive sectors, then the bit stream is interrupted at the sector end, and hence a macroblock at the last end of the sector is interrupted. Since the final macroblock cannot be decoded, the bit stream except the final macroblock is connected to another bit stream. The final macroblock can be removed because it is already known from the information of the flag in the slice header that the amount of code of all the intra macroblocks from the start of the slice.

The generated bit stream thus connected for high-speed forward and reverse reproduction is shown in FIG. 25. As shown in FIG. 25, the bit stream is composed of data of intra macroblocks.

If a slice of the generated bit stream for high-speed reproduction is a slice with all intra macroblocks, then because the horizontal positions of the macroblocks are written in a macroblock increment, it can be decoded by the normal MPEG decoding process.

If a slice of the generated bit stream for high-speed reproduction is a slice with some intra macroblocks, then the horizontal positions of the macroblocks are determined by horizontal MB addresses. Though this process is different from the normal MPEG decoding process, the addresses represent information which is the same as addresses obtained after MPEG decoding. Therefore, the slice can be decoded simply by modifying the process of decoding the bit stream in the inverse VLC.

### [Display of an image reproduced at a high speed]

The image data thus decoded for high-speed reproduction are data of intra macroblocks. As the image data are P picture data, pictures are decoded as P pictures at all times for high-speed reproduction. At this time, a frame which is presently displayed is used as a frame to be referred to, and the image data decoded for high-speed reproduction are updated in a given position on the reference frame by an MB address.

### (Display process 1)

The image data decoded for high-speed reproduction are updated to the right or downwardly on the image area according to the MB addresses. In this display process, image data of intra macroblocks are decoded in a memory of the field memory group 28 which is different from a memory that stored a picture to be referred to, and macroblocks between those macroblocks are regarded as skip macroblocks of MPEG. One frame is decoded by copying image data of the frame to be referred to. If the decoding of one frame is completed at the timing of the display, then the image decoded in the different memory is outputted as a display image. If the decoding of one frame is not completed, the image data of the frame to be referred to are outputted as a display image. In this embodiment, the decoding process consumes an extra time required by the copying process. The memory controller 23 may however control the field memory group 28 as usual.

### (Display process 2)

In this embodiment, data decoded from image data of intra macroblocks are written over the stored data in the memory of the field memory group 28 which stores a picture to be referred to.

According to this decoding process, since a picture is present in a certain memory at all times, even if the decoding (writing over) of all image data of intra macroblocks for high-speed reproduction of one frame is not completed, an image which is smooth and natural can be displayed by displaying the contents of the memory. The updating of the image data decoded for high-speed reproduction and the timing of the display may be independent of each other.

The image data of the remaining intra macroblocks are decoded (written over) irrespective of the timing of the display, and displayed at the next timing of the display.

In this embodiment, sufficient time is available for the decoding for writing the image data over the stored data, but a control process for the memory controller 23 is complex.

According to the present invention, as described above, there are thus provided a moving image encoding apparatus, a moving image recording apparatus, a moving image recording apparatus, a moving image recording/transmitting format (bit stream syntax), a moving image reproducing apparatus, and a moving image decoding apparatus which are capable of reproducing moving image data at a high speed in forward and reverse directions when high-speed reproduction is selected.

### Description of the reference numerals

- 5: macroblock counter
- 16: VLC
- 18: bit counter
- 22: inverse VLC
- 52: slice counter
- 53: frame counter
- 54: FLC (header adder)
- 103: data selector
- 105: order changing unit
- 108: recording head
- 209: data determining unit
- 211: order changing unit
- 212: decoder

## Claims

1. An image signal encoding method of encoding an image signal, characterized in that one image is divided and encoded into a plurality of slices, and intra slice information indicative of a structure of intra-frame coded macroblocks in the slices is added to a header.

2. An image signal encoding method characterized in that said header comprises a slice header having a sync code.

3. An image signal encoding method characterized in that said slices are assigned such that the start of the slices is an intra-frame coded macroblock.

4. An image signal encoding method characterized in that said slices are assigned and encoded to slices in which all macroblocks are intra-frame coded and other slices, and said intra slice information indicative of whether all the macroblocks in the slices are intra-frame coded or not is added to said header.

5. An image signal encoding method characterized in that intra-frame coded regions are scattered and encoded so that at least some of the intra-frame coded regions are different from each other with respect to a plurality of images.

6. An image signal encoding method characterized in that encoded data of the intra-frame coded macroblocks in the slices are moved immediately after a slice header.

7. An image signal encoding method characterized in that encoded data of the intra-frame coded macroblocks in the slices are moved immediately after a GOP header.

8. An image signal encoding method characterized in that motion compensation is carried out in a limited range corresponding to the intra-frame coded regions to encode said plurality of images.

9. An image signal encoding apparatus for encoding an image signal, characterized by encoding means for dividing and encoding one image into a plurality of slices, and adding means for adding intra slice information indicative of a structure of intra-frame coded macroblocks in the slices to a header.

10. An image signal encoding apparatus characterized in that said header comprises a slice header having a sync code.

11. An image signal encoding apparatus characterized in that said encoding means assigns said slices such that the start of the slices is an intra-frame coded macroblock.

12. An image signal encoding apparatus characterized in that said encoding means assign and encode said slices to slices in which all macroblocks are intra-frame coded and other slices, and said adding means adds said intra slice information indicative of whether all the macroblocks in the slices are intra-frame coded or not said header.

13. An image signal encoding apparatus characterized in that said encoding means scatters and encodes said intra-frame coded regions so that at least some of the intra-frame coded regions are different from each other.

14. An image signal encoding apparatus characterized by order changing means for moving encoded data of the intra-frame coded macroblocks in the slices immediately after a slice header.

15. An image signal encoding apparatus characterized in by order changing means for moving encoded data of the intra-frame coded macroblocks in the slices immediately after a GOP header.

16. An image signal encoding apparatus characterized in that said encoding means carries out motion compensation in a limited range corresponding to the intra-frame coded regions to encode said plurality of images.

17. An image signal decoding method of decoding an encoded image signal, characterized in that intra slice information indicative of a structure of intra-frame coded macroblocks in each of slices is decoded from a predetermined header of an encoded image signal, and the intra-frame coded macroblocks are extracted from said encoded image signal based on the decoded intra slice information.

18. An image signal decoding method characterized in that said header comprises a slice header having a sync code, and the start of each of the slices is determined by detecting said sync code.

19. An image signal decoding method characterized in that said encoded image signal is reproduced at a variable speed from a recording medium, and the extracted intra-frame coded macroblocks are decoded to generate an image which is reproduced at a variable speed.

20. An image signal decoding method characterized in that macroblocks other than the decoded macroblocks are copied and decoded from a past decoded image which is referred to for thereby generating the image which is reproduced at a variable speed.

21. An image signal decoding method characterized in that the decoded macroblocks are written over a past decoded image which is referred to for thereby generating the image which is reproduced at a variable speed.

22. An image signal decoding method of decoding an encoded image signal, characterized in that an encoded image signal is reproduced at a normal speed from a recording medium, intra slice information indicative of a structure of intra-frame coded macroblocks in each of slices is decoded from a predetermined header of the reproduced encoded image signal, the order of encoded data of the intra-frame coded macroblocks are changed to an order with which the image signal has been encoded, based on the decoded intra slice information, and the encoded image signal which has been changed in order is decoded to generate a normally reproduced image.

23. An image signal decoding method characterized in that said encoded image signal is a signal in which the encoded data of the intra-frame coded macroblocks in the slices are moved immediately after a slice header.

24. An image signal decoding method characterized in that said encoded image signal is a signal in which the encoded data of the intra-frame coded macroblocks in a GOP are moved immediately after a GOP header.

25. An image signal decoding apparatus for decoding an encoded image signal, characterized by means for decoding intra slice information indicative of a structure of intra-frame coded macroblocks in each of slices from a predetermined header of an encoded image signal, and extracting means for extracting the intra-frame coded macroblocks from said encoded image signal based on the decoded intra slice information.

26. An image signal decoding apparatus characterized in that said header comprises a slice header having a sync code, and characterized by means for detecting said sync code.

27. An image signal decoding apparatus characterized by means for reproducing said encoded image signal at a variable speed from a recording medium, and decoding means for decoding the intra-frame coded macroblocks extracted by said extracting means to generate an image which is reproduced at a variable speed.

28. An image signal decoding apparatus characterized in that said decoding means copies and decodes macroblocks other than the decoded macroblocks from a past decoded image which is referred to for thereby generating the image which is reproduced at a variable speed.

29. An image signal decoding apparatus characterized in that said decoding means writes the decoded macroblocks over a past decoded image which is referred to for thereby generating the image which is reproduced at a variable speed.

30. An image signal decoding apparatus for decoding an encoded image signal, characterized by reproducing means for reproducing an encoded image signal at a normal speed from a recording medium, means for decoding intra slice information indicative of a structure of intra-frame coded macroblocks in each of slices from a predetermined header of the reproduced encoded image signal, order changing means for changing the order of encoded data of the intra-frame coded macroblocks to an order with which the image signal has been encoded, based on the decoded intra slice information, and means for decoding the encoded image signal which has been changed in order to generate a normally reproduced image.

31. An image signal decoding apparatus characterized in that said encoded image signal is a signal in which the encoded data of the intra-frame coded macroblocks in the slices are moved immediately after a slice header.

32. An image signal decoding apparatus characterized in that said encoded image signal is a signal in which the encoded data of the intra-frame coded macroblocks in a GOP are moved immediately after a GOP header.

33. An image signal recording medium with an encoded image signal recorded, characterized in that one image is divided and encoded into a plurality of slices, intra slice information indicative of a structure of intra-frame coded macroblocks in the slices is added to a header to generate an encoded bit stream, and the encoded bit stream is recorded on a recording medium.

## Amended claims

### Amended claims under Art. 19.1 PCT

1. An image signal encoding method of encoding an image signal, characterized in that one image is divided and encoded into a plurality of slices, and intra slice information indicative of a structure of intra-frame coded macroblocks in the slices is added to a header.

2. (Amended) An image signal encoding method according to claim 1, characterized in that said header comprises a slice header having a sync code.

3. (Amended) An image signal encoding method according to claim 1, characterized in that said slices are assigned such that the start of the slices is an intra-frame coded macroblock.

4. (Amended) An image signal encoding method according to claim 1, characterized in that said slices are assigned and encoded to slices in which all macroblocks are intra-frame coded and other slices, and said intra slice information indicative of whether all the macroblocks in the slices are intra-frame coded or not is added to said header.

5. (Amended) An image signal encoding method according to claim 1, characterized in that intra-frame coded regions are scattered and encoded so that at least some of the intra-frame coded regions are different from each other with respect to a plurality of images.

6. (Amended) An image signal encoding method according to claim 2, characterized in that encoded data of the intra-frame coded macroblocks in the slices are moved immediately after a slice header.

7. (Amended) An image signal encoding method according to claim 2, characterized in that encoded data of the intra-frame coded macroblocks in the slices are moved immediately after a GOP header.

8. (Amended) An image signal encoding method according to claim 5, characterized in that motion compensation is carried out in a limited range corresponding to the intra-frame coded regions to encode said plurality of images.

9. An image signal encoding apparatus for encoding an image signal, characterized by encoding means for dividing and encoding one image into a plurality of slices, and adding means for adding intra slice information indicative of a structure of intra-frame coded macroblocks in the slices to a header.

10. (Amended) An image signal encoding apparatus according to claim 9, characterized in that said header comprises a slice header having a sync code.

11. (Amended) An image signal encoding apparatus according to claim 9, characterized in that said encoding means assigns said slices such that the start of the slices is an intra-frame coded macroblock.

12. (Amended) An image signal encoding apparatus according to claim 9, characterized in that said encoding means assign and encode said slices to slices in which all macroblocks are intra-frame coded and other slices, and said adding means adds said intra slice information indicative of whether all the macroblocks in the slices are intra-frame coded or not said header.

13. (Amended) An image signal encoding apparatus according to claim 9, characterized in that said encoding means scatters and encodes said intra-frame coded regions so that at least some of the intra-frame coded regions are different from each other.

14. (Amended) An image signal encoding apparatus according to claim 10, characterized by order changing means for moving encoded data of the intra-frame coded macroblocks in the slices immediately after a slice header.

15. (Amended) An image signal encoding apparatus according to claim 10, characterized in by order changing means for moving encoded data of the intra-frame coded macroblocks in the slices immediately after a GOP header.

16. (Amended) An image signal encoding apparatus according to claim 13, characterized in that said encoding means carries out motion compensation in a limited range corresponding to the intra-frame coded regions to encode said plurality of images.

17. An image signal decoding method of decoding an encoded image signal, characterized in that intra slice information indicative of a structure of intra-frame coded macroblocks in each of slices is decoded from a predetermined header of an encoded image signal, and the intra-frame coded macroblocks are extracted from said encoded image signal based on the decoded intra slice information.

18. (Amended) An image signal decoding method according to claim 17, characterized in that said header comprises a slice header having a sync code, and the start of each of the slices is determined by detecting said sync code.

19. (Amended) An image signal decoding method according to claim 17, characterized in that said encoded image signal is reproduced at a variable speed from a recording medium, and the extracted intra-frame coded macroblocks are decoded to generate an image which is reproduced at a variable speed.

20. (Amended) An image signal decoding method according to claim 19, characterized in that macroblocks other than the decoded macroblocks are copied and decoded from a past decoded image which is referred to for thereby generating the image which is reproduced at a variable speed.

21. (Amended) An image signal decoding method according to claim 19, characterized in that the decoded macroblocks are written over a past decoded image which is referred to for thereby generating the image which is reproduced at a variable speed.

22. An image signal decoding method of decoding an encoded image signal, characterized in that an encoded image signal is reproduced at a normal speed from a recording medium, intra slice information indicative of a structure of intra-frame coded macroblocks in each of slices is decoded from a predetermined header of the reproduced encoded image signal, the order of encoded data of the intra-frame coded macroblocks are changed to an order with which the image signal has been encoded, based on the decoded intra slice information, and the encoded image signal which has been changed in order is decoded to generate a normally reproduced image.

23. (Amended) An image signal decoding method according to claim 22, characterized in that said encoded image signal is a signal in which the encoded data of the intra-frame coded macroblocks in the slices are moved immediately after a slice header.

24. (Amended) An image signal decoding method according to claim 22, characterized in that said encoded image signal is a signal in which the encoded data of the intra-frame coded macroblocks in a GOP are moved immediately after a GOP header.

25. An image signal decoding apparatus for decoding an encoded image signal, characterized by means for decoding intra slice information indicative of a structure of intra-frame coded macroblocks in each of slices from a predetermined header of an encoded image signal, and extracting means for extracting the intra-frame coded macroblocks from said encoded image signal based on the decoded intra slice information.

26. (Amended) An image signal decoding apparatus according to claim 25, characterized in that said header comprises a slice header having a sync code, and characterized by means for detecting said sync code.

27. (Amended) An image signal decoding apparatus according to claim 25, characterized by means for reproducing said encoded image signal at a variable speed from a recording medium, and decoding means for decoding the intra-frame coded macroblocks extracted by said extracting means to generate an image which is reproduced at a variable speed.

28. (Amended) An image signal decoding apparatus according to claim 27, characterized in that said decoding means copies and decodes macroblocks other than the decoded macroblocks from a past decoded image which is referred to for thereby generating the image which is reproduced at a variable speed.

29. (Amended) An image signal decoding apparatus according to claim 27, characterized in that said decoding means writes the decoded macroblocks over a past decoded image which is referred to for thereby generating the image which is reproduced at a variable speed.

30. An image signal decoding apparatus for decoding an encoded image signal, characterized by reproducing means for reproducing an encoded image signal at a normal speed from a recording medium, means for decoding intra slice information indicative of a structure of intra-frame coded macroblocks in each of slices from a predetermined header of the reproduced encoded image signal, order changing means for changing the order of encoded data of the intra-frame coded macroblocks to an order with which the image signal has been encoded, based on the decoded intra slice information, and means for decoding the encoded image signal which has been changed in order to generate a normally reproduced image.

31. (Amended) An image signal decoding apparatus according to claim 30, characterized in that said encoded image signal is a signal in which the encoded data of the intra-frame coded macroblocks in the slices are moved immediately after a slice header.

32. (Amended) An image signal decoding apparatus according to claim 30, characterized in that said encoded image signal is a signal in which the encoded data of the intra-frame coded macroblocks in a GOP are moved immediately after a GOP header.

33. An image signal recording medium with an encoded image signal recorded, characterized in that one image is divided and encoded into a plurality of slices, intra slice information indicative of a structure of intra-frame coded macroblocks in the slices is added to a header to generate an encoded bit stream, and the encoded bit stream is recorded on a recording medium.
